# EUROPEAN PATENT APPLICATION

(11) **EP 3 324 595 A1**
(43) Date of publication of application: **23.05.2018**
(21) Application number: 15901970.2
(22) Date of filing: 25.08.2015
(51) Int. Cl.: H04L 29/06

(54) **DATA TRANSMISSION METHOD, RELEVANT DEVICE AND SYSTEM**

(71) Applicant: Huawei Technologies Co., Ltd., Longgang District Shenzhen, Guangdong 518129 (CN)
(72) Inventor: HUANG, Zhenglei, Shenzhen Guangdong 518129 (CN); ZHANG, Wanqiang, Shenzhen Guangdong 518129 (CN); DENG, Qiang, Shenzhen Guangdong 518129 (CN)
(74) Representative: Epping - Hermann - Fischer
(86) International application number: PCT/CN2015/088063
(87) International publication number: WO 2017/031699

(57) **Abstract**

Embodiments of the present invention disclose a data transmission method, including: receiving, by a core network node, a first packet from user equipment UE or an application server AS; translating the first packet according to non-Internet Protocol IP data transmission information, to obtain a second packet; and sending the second packet by using a data transmission channel. The embodiments of the present invention further provide a related data transmission device and system. In the embodiments of the present invention, a scenario in which a sending party and a receiving party support different protocols is supported by means of packet translation. In addition, performing packet translation according to specific non-IP data transmission information may strengthen negotiation capabilities of the two parties, so that the solution has stronger operability and better practicality.

## Description

### TECHNICAL FIELD

The present invention relates to the communications field, and in particular, to a data transmission method, and a related device and system.

### BACKGROUND

With development of the 3rd Generation Partnership Project (The 3^{rd} Generation Partnership Project, 3GPP for short), to support Long Term Evolution (Long Term Evolution, LTE for short) on a wireless side, System Architecture Evolution (System Architecture Evolution, SAE for short) on a network side has been studied since 2004. LTE and SAE jointly form an evolved packet system (Evolved Packet System, EPS for short), and end-to-end all-IP networking and a flattened network structure are used in an EPS network architecture. In addition, the 3GPP also currently carries out a Cellular Internet of Things (Cellular Internet of Things, CloT for short)-based study. Architecture enhancement is performed, to support an Internet of Things device with great complexity, limited power, and a low data rate.

To reduce costs and complexity, some Internet of Things terminal devices do not need to use an Internet Protocol (Internet Protocol, IP for short) service or do not have an IP support capability. Therefore, an effective mechanism that supports non-IP data transmission needs to be established in an EPS network or in a CloT system.

When data is transmitted in an existing EPS network or CloT system, if a terminal device does not need to use an IP service, the terminal device may directly encapsulate non-IP data, and transmit the non-IP data by using a tunnel.

However, directly encapsulating and sending the non-IP data in the EPS network or in the CloT system is applicable only to a scenario in which a sending party and a receiving party support a same non-IP protocol. If the two parties support different protocol types, for example, one supports an IP protocol, and the other supports a non-IP protocol, non-IP data transmission cannot be implemented.

### SUMMARY

Embodiments of the present invention provide a data transmission method, and a related device and system, so that a scenario in which a sending party and a receiving party support different protocols can be supported by means of packet translation. In addition, performing packet translation according to specific non-IP data transmission information may strengthen negotiation capabilities of the two parties, so that the solution has stronger operability and better practicality.

In view of this, a first aspect of the present invention provides a data transmission method, including:
receiving, by a core network node, a first packet from user equipment UE or an application server AS;
translating, by the core network node, the first packet according to non-Internet Protocol IP data transmission information, to obtain a second packet; and
sending, by the core network node, the second packet by using a data transmission channel.

With reference to the first aspect, in a first possible implementation, the non-IP data transmission information specifically includes a packet data network PDN type, a service data parameter, and an IP support capability; or
the non-IP data transmission information specifically includes the PDN type and the service data parameter.

With reference to the first aspect or the first possible implementation of the first aspect, in a second possible implementation, the sending, by the core network node, the second packet by using a data transmission channel includes:
sending, by the core network node, the second packet by using a data transmission bearer.

With reference to the second possible implementation of the first aspect, in a third possible implementation, before the sending, by the core network node, the second packet by using a data transmission bearer, the method further includes:
receiving, by the core network node, the non-IP data transmission information sent by the UE;
establishing, by the core network node, the data transmission bearer according to the non-IP data transmission information; and
sending, by the core network node, non-IP data bearer information to the UE, where the non-IP data bearer information is used to notify the UE that the data transmission bearer is successfully established.

With reference to the third possible implementation of the first aspect, in a fourth possible implementation, after the receiving, by the core network node, the non-IP data transmission information sent by the UE, the method further includes:
if the core network node determines, according to the non-IP data transmission information, to assign the IP address to the UE, sending, by the core network node, the IP address to the UE.

With reference to the first aspect, in a fifth possible implementation,
the first packet is an IP packet, and the second packet is a non-IP packet; or
the first packet is the non-IP packet, and the second packet is the IP packet.

With reference to any one of the first aspect, or the first to the fifth implementations of the first aspect, in a sixth possible implementation, the translating, by the core network node, the first packet according to non-Internet Protocol IP data transmission information, to obtain a second packet includes:
translating, by the core network node, the IP packet into a non-IP packet according to the non-IP data transmission information; or
translating, by the core network node, the non-IP packet into an IP packet according to the non-IP data transmission information.

With reference to the sixth possible implementation of the first aspect, in a seventh possible implementation, the receiving, by a core network node, a first packet from user equipment UE or an application server AS includes:
receiving, by the core network node, the IP packet sent by the UE or the AS, where the IP packet carries an IP address of a sending party and an IP address of a receiving party;
the translating, by the core network node, the IP packet into a non-IP packet according to the non-IP data transmission information includes:
   translating, by the core network node, the IP addresses in the IP packet into an identifier in the non-IP packet, where the identifier is used to indicate the sending party and the receiving party of the non-IP packet; and
   the sending, by the core network node, the second packet by using a data transmission channel includes:
      sending, by the core network node, the non-IP packet by using the data transmission channel.

With reference to the sixth possible implementation of the first aspect, in an eighth possible implementation, the receiving, by a core network node, a first packet from user equipment UE or an application server AS includes:
receiving, by the core network node, the non-IP packet sent by the UE or the AS, where the non-IP packet carries an identifier that is used to indicate a sending party and a receiving party;
the translating, by the core network node, the non-IP packet into an IP packet according to the non-IP data transmission information includes:
   translating, by the core network node, the identifier in the non-IP packet into IP addresses in the IP packet; and
   the sending, by the core network node, the second packet by using a data transmission channel includes:
      sending, by the core network node, the IP packet by using the data transmission channel.

With reference to the sixth possible implementation of the first aspect, in a ninth possible implementation, the receiving, by a core network node, a first packet from user equipment UE or an application server AS includes:
receiving, by the core network node, the IP packet sent by the AS;
the translating, by the core network node, the IP packet into a non-IP packet according to the non-IP data transmission information includes:
   compressing, by the core network node, a header of the IP packet according to the non-IP data transmission information, to obtain compressed header information;
   splitting, by the core network node, the IP packet into multiple IP sub-packets according to the non-IP data transmission information; and
   adding, by the core network node, the compressed header information to each of the IP sub-packets, to obtain multiple non-IP sub-packets; and
   the sending, by the core network node, the second packet by using a data transmission channel includes:
      sending, by the core network node, the non-IP packet by using the data transmission channel, where the non-IP packet includes the multiple non-IP sub-packets.

With reference to the sixth possible implementation of the first aspect, in a tenth possible implementation, the receiving, by a core network node, a first packet from user equipment UE or an application server AS includes:
receiving, by the core network node, the non-IP sub-packets sent by the UE;
the translating, by the core network node, the non-IP packet into an IP packet according to the non-IP data transmission information includes:
   decompressing, by the core network node according to the non-IP data transmission information, compressed header information carried in the non-IP sub-packets, to obtain IP header information; and
   reassembling, by the core network node, the received non-IP sub-packets into one IP packet according to the non-IP data transmission information, where the IP packet carries the IP header information obtained by means of decompression; and
   the sending, by the core network node, the second packet by using a data transmission channel includes:
      sending, by the core network node, the IP packet by using the data transmission channel.

A second aspect of the present invention provides another data transmission method, including:
sending, by user equipment UE, a first packet to a core network node; and
sending, by the UE, non-Internet Protocol IP data transmission information to the core network node, to enable the core network node to: translate the first packet according to the non-IP data transmission information, to obtain a second packet, and send the second packet.

With reference to the second aspect, in a first possible implementation, the non-IP data transmission information specifically includes a packet data network PDN type, a service data parameter, and an IP support capability;
the non-IP data transmission information specifically includes the PDN type and the service data parameter; or
the non-IP data transmission information specifically includes the PDN type and the IP support capability.

With reference to the second aspect or the first possible implementation of the second aspect, in a second possible implementation, after the sending, by the UE, non-Internet Protocol IP data transmission information to the core network node, the method further includes:
receiving, by the UE, non-IP data bearer information sent by the core network node, where the non-IP data bearer information is used by the UE to determine that a data transmission bearer is successfully established.

With reference to the second possible implementation of the second aspect, in a third possible implementation, after the sending, by the UE, non-Internet Protocol IP data transmission information to the core network node, the method further includes:
if the core network node determines, according to the non-IP data transmission information, to assign the IP address to the UE, receiving, by the UE, the IP address sent by the core network node.

With reference to the second aspect, in a fourth possible implementation,
the first packet is an IP packet, and the second packet is a non-IP packet; or
the first packet is the non-IP packet, and the second packet is the IP packet.

With reference to any one of the second aspect, or the first to the fourth possible implementations of the second aspect, in a fifth possible implementation, the sending, by user equipment UE, a first packet to a core network node includes:
sending, by the UE, the non-IP packet to the core network node, where the non-IP packet carries an identifier that is used to indicate a sending party and a receiving party; and
the enabling the core network node to translate the first packet according to the non-IP data transmission information, to obtain a second packet includes:
   enabling the core network node to translate the identifier in the non-IP packet into IP addresses in the IP packet.

With reference to any one of the second aspect, or the first to the fourth possible implementations of the second aspect, in a sixth possible implementation, the sending, by user equipment UE, a first packet to a core network node includes:
sending, by the UE, the IP packet to the core network node, where the IP packet carries an IP address of a sending party and an IP address of a receiving party; and
the enabling the core network node to translate the first packet according to the non-IP data transmission information, to obtain a second packet includes:
   enabling the core network node to translate the IP addresses in the IP packet into an identifier in the non-IP packet, where the identifier is used to indicate the sending party and the receiving party of the non-IP packet.

With reference to any one of the second aspect, or the first to the fourth possible implementations of the second aspect, in a seventh possible implementation, the sending, by user equipment UE, a first packet to a core network node includes:
sending, by the UE, non-IP sub-packets to the core network node, to enable the core network node to decompress, according to the non-IP data transmission information, compressed header information carried in the non-IP sub-packets, to obtain IP header information; and
the enabling the core network node to translate the first packet according to the non-IP data transmission information, to obtain a second packet includes:
   enabling the core network node to reassemble the multiple received non-IP sub-packets into one IP packet according to the non-IP data transmission information, where the IP packet carries the IP header information obtained by means of decompression.

With reference to any one of the second aspect, or the first to the fourth possible implementations of the second aspect, in an eighth possible implementation, after the sending, by user equipment UE, a first packet to a core network node, the method further includes:
receiving, by the UE, a non-IP packet sent by the core network node, and translating the non-IP packet to obtain an IP packet.

A third aspect of the present invention provides a core network node, including:
a first receiving module, configured to receive a first packet from user equipment UE or an application server AS;
a translation module, configured to translate, according to non-Internet Protocol IP data transmission information, the first packet received by the first receiving module, to obtain a second packet; and
a first sending module, configured to send, by using a data transmission channel, the second packet obtained after the translation module performs translation.

With reference to the third aspect, in a first possible implementation, the non-IP data transmission information specifically includes a packet data network PDN type, a service data parameter, and an IP support capability;
the non-IP data transmission information specifically includes the PDN type and the service data parameter; or
the non-IP data transmission information specifically includes the PDN type and the IP support capability.

With reference to the third aspect or the first possible implementation of the third aspect, in a second possible implementation, the first sending module includes:
a sending unit, configured to send the second packet by using a data transmission bearer.

With reference to the second possible implementation of the third aspect, in a third possible implementation, the core network node further includes:
a second receiving module, configured to: before the first sending module sends the second packet by using the data transmission bearer, receive the non-IP data transmission information sent by the UE;
an establishment module, configured to establish the data transmission bearer according to the non-IP data transmission information received by the second receiving module; and
a second sending module, configured to send non-IP data bearer information to the UE, where the non-IP data bearer information is used to notify the UE that the data transmission bearer is successfully established.

With reference to the second possible implementation of the third aspect, in a fourth possible implementation, the core network node further includes:
a third sending module, configured to: after the second receiving module receives the non-IP data transmission information sent by the UE, if the core network node determines, according to the non-IP data transmission information, to assign the IP address to the UE, send, by the core network node, the IP address to the UE.

With reference to the third aspect, in a fifth possible implementation,
the first packet is an IP packet, and the second packet is a non-IP packet; or
the first packet is the non-IP packet, and the second packet is the IP packet.

With reference to any one of the third aspect, or the first to the fifth possible implementations of the third aspect, in a sixth possible implementation, the translation module includes:
a first translation unit, configured to: translate the IP packet into a non-IP packet according to the non-IP data transmission information; or
translate the non-IP packet into an IP packet according to the non-IP data transmission information.

With reference to the sixth possible implementation of the third aspect, in a seventh possible implementation, the first receiving module includes:
a first receiving unit, configured to receive the IP packet sent by the UE or the AS, where the IP packet carries an IP address of a sending party and an IP address of a receiving party;
the translation module includes:
   a second translation unit, configured to translate, into an identifier in the non-IP packet, the IP addresses in the IP packet received by the first receiving unit, where the identifier is used to indicate the sending party and the receiving party of the non-IP packet; and
   the first sending module includes:
      a first sending unit, configured to send, by using the data transmission channel, the non-IP packet obtained after the second translation unit performs translation.

With reference to the sixth possible implementation of the third aspect, in an eighth possible implementation, the first receiving module includes:
a second receiving unit, configured to receive the non-IP packet sent by the UE or the AS, where the non-IP packet carries an identifier that is used to indicate a sending party and a receiving party;
the translation module includes:
   a third translation unit, configured to translate, into IP addresses in the IP packet, the identifier in the non-IP packet received by the second receiving unit; and
   the first sending module includes:
      a second sending unit, configured to send, by using the data transmission channel, the IP packet obtained after the third translation unit performs translation.

With reference to the sixth possible implementation of the third aspect, in a ninth possible implementation, the first receiving module includes:
a third receiving unit, configured to receive the IP packet sent by the AS;
the translation module includes:
   a compression unit, configured to compress, according to the non-IP data transmission information, a header of the IP packet received by the third receiving unit, to obtain compressed header information;
   a splitting unit, configured to split the IP packet into multiple IP sub-packets according to the non-IP data transmission information; and
   an adding unit, configured to add, to each of the IP sub-packets obtained after the splitting unit performs splitting, the header information obtained after the compression unit performs compression, to obtain multiple non-IP sub-packets; and
   the first sending module includes:
      a third sending unit, configured to send the non-IP packet by using the data transmission channel, where the non-IP packet includes the multiple non-IP sub-packets that are obtained after the adding unit adds the header information obtained after the compression unit performs compression.

With reference to the sixth possible implementation of the third aspect, in a tenth possible implementation, the first receiving module includes:
a fourth receiving unit, configured to receive the non-IP sub-packets sent by the UE;
the translation module includes:
   a decompression unit, configured to decompress, according to the non-IP data transmission information, compressed header information carried in the non-IP sub-packets, to obtain IP header information; and
   a reassembling unit, configured to reassemble the multiple received non-IP sub-packets into one IP packet according to the non-IP data transmission information, where the IP packet carries the IP header information obtained after the decompression unit performs decompression; and
   the first sending module includes:
      a fourth sending unit, configured to send, by the core network node, the IP packet by using the data transmission channel.

A fourth aspect of the present invention provides user equipment, including:
a first sending module, configured to send a first packet to a core network node; and
a second sending module, configured to send non-Internet Protocol IP data transmission information to the core network node, to enable the core network node to: translate, according to the non-IP data transmission information, the first packet sent by the first sending module, to obtain a second packet, and send the second packet.

With reference to the fourth aspect, in a first possible implementation, the non-IP data transmission information specifically includes a packet data network PDN type, a service data parameter, and an IP support capability;
the non-IP data transmission information specifically includes the PDN type and the service data parameter; or
the non-IP data transmission information specifically includes the PDN type and the IP support capability.

With reference to the fourth aspect or the first possible implementation of the fourth aspect, in a second possible implementation, the user equipment further includes:
a receiving module, configured to: after the second sending module sends the non-IP data transmission information to the core network node, receive non-IP data bearer information sent by the core network node, where the non-IP data bearer information is used by the UE to determine that a data transmission bearer is successfully established.

With reference to the second possible implementation of the fourth aspect, in a third possible implementation, the user equipment further includes:
a third sending module, configured to: after the second sending module sends the non-IP data transmission information to the core network node, if the core network node determines, according to the non-IP data transmission information, to assign the IP address to the UE, receive the IP address sent by the core network node.

With reference to the fourth aspect, in a fourth possible implementation,
the first packet is an IP packet, and the second packet is a non-IP packet; or
the first packet is the non-IP packet, and the second packet is the IP packet.

With reference to any one of the fourth aspect, or the first to the fourth possible implementations of the fourth aspect, in a fifth possible implementation, the first sending module includes:
a first sending unit, configured to send the non-IP packet to the core network node, where the non-IP packet carries an identifier that is used to indicate a sending party and a receiving party; and
the second sending module includes:
   a first translation unit, configured to enable the core network node to translate, into IP addresses in the IP packet, the identifier in the non-IP packet sent by the first sending unit.

With reference to any one of the fourth aspect, or the first to the fourth possible implementations of the fourth aspect, in a sixth possible implementation, the first sending module includes:
a second sending unit, configured to send, by the UE, the IP packet to the core network node, where the IP packet carries an IP address of a sending party and an IP address of a receiving party; and
the second sending module includes:
   a second translation unit, configured to enable the core network node to translate, into an identifier in the non-IP packet, the IP addresses in the IP packet sent by the second sending unit, where the identifier is used to indicate the sending party and the receiving party of the non-IP packet.

With reference to any one of the fourth aspect, or the first to the fourth possible implementations of the fourth aspect, in a seventh possible implementation, the first sending module includes:
a third sending unit, configured to send non-IP sub-packets to the core network node, to enable the core network node to decompress, according to the non-IP data transmission information, compressed header information carried in the non-IP sub-packets, to obtain IP header information; and
the second sending module includes:
   a reassembling unit, configured to enable the core network node to reassemble, into one IP packet according to the non-IP data transmission information, the multiple received non-IP sub-packets that are sent by the third sending unit, where the IP packet carries the IP header information obtained by means of decompression.

With reference to any one of the fourth aspect, or the first to the fourth possible implementations of the fourth aspect, in an eighth possible implementation, the user equipment further includes:
a processing module, configured to: receive a non-IP packet sent by the core network node, and translate the non-IP packet to obtain an IP packet.

A fifth aspect of the present invention provides a core network node, including:
an input device, an output device, a processor, and a memory, where
the input device executes the following procedure:
   receiving a first packet from user equipment UE or an application server AS;
   the processor executes the following procedure:
      translating the first packet according to non-Internet Protocol IP data transmission information, to obtain a second packet; and
      the output device executes the following procedure:
         sending the second packet by using a data transmission channel.

A sixth aspect of the present invention provides user equipment, including:
an input device, an output device, a processor, and a memory, where
the output device executes the following procedure:
   sending a first packet to a core network node; and
   sending non-Internet Protocol IP data transmission information to the core network node, to enable the core network node to: translate the first packet according to the non-IP data transmission information, to obtain a second packet, and send the second packet.

A seventh aspect of the present invention provides a data transmission system, including: a core network node, user equipment, and an application server, where
the core network node is configured to: receive a first packet from the user equipment UE or the application server AS; translate the first packet according to non-Internet Protocol IP data transmission information, to obtain a second packet; and send the second packet by using a data transmission channel; and
the user equipment is configured to: send a first packet to the core network node, and send non-Internet Protocol IP data transmission information to the core network node, to enable the core network node to: translate the first packet according to the non-IP data transmission information, to obtain a second packet, and send the second packet.

It may be learned from the foregoing technical solutions that the embodiments of the present invention have the following advantages:
In the embodiments of the present invention, a method for translating a packet by using non-IP data transmission information is provided. The core network node translates the first packet, and sends, to a target device, the second packet obtained after translation is performed. So far, a non-IP data transmission process is completed. A scenario in which the sending party and the receiving party support different protocols is supported by means of packet translation. In addition, performing packet translation according to specific non-IP data transmission information may strengthen negotiation capabilities of the two parties, so that the solution has stronger operability and better practicality.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show only some embodiments of the present invention, and persons skilled in the art may still derive other drawings from these accompanying drawings without creative efforts.
FIG. 1 is a schematic diagram of an embodiment of a data transmission method according to an embodiment of the present invention;
FIG. 2 is a schematic diagram of a non-IP service data flow transmission process in an EPS network according to an embodiment of the present invention;
FIG. 3 is a schematic diagram of a non-IP service data flow transmission process in a non-roaming scenario in a CloT system according to an embodiment of the present invention;
FIG. 4 is a schematic diagram of a non-IP service data flow transmission process in a roaming scenario in a CloT system according to an embodiment of the present invention;
FIG. 5 is a schematic diagram of a bearer model in an EPS network according to an embodiment of the present invention;
FIG. 6 is a schematic diagram of a non-IP data bearer establishment process in an EPS network according to an embodiment of the present invention;
FIG. 7 is another schematic diagram of a non-IP service data flow transmission process in an EPS network according to an embodiment of the present invention;
FIG. 8 is another schematic diagram of a non-IP service data flow transmission process in a non-roaming scenario in a CloT system according to an embodiment of the present invention;
FIG. 9 is another schematic diagram of a non-IP service data flow transmission process in a roaming scenario in a CloT system according to an embodiment of the present invention;
FIG. 10 is another schematic diagram of a non-IP service data flow transmission process in an EPS network according to an embodiment of the present invention;
FIG. 11 is another schematic diagram of a non-IP service data flow transmission process in a non-roaming scenario in a CloT system according to an embodiment of the present invention;
FIG. 12 is another schematic diagram of a non-IP service data flow transmission process in a roaming scenario in a CloT system according to an embodiment of the present invention;
FIG. 13 is another schematic diagram of a non-IP service data flow transmission process in an EPS network according to an embodiment of the present invention;
FIG. 14 is another schematic diagram of a non-IP service data flow transmission process in a non-roaming scenario in a CloT system according to an embodiment of the present invention;
FIG. 15 is another schematic diagram of a non-IP service data flow transmission process in a roaming scenario in a CloT system according to an embodiment of the present invention;
FIG. 16 is a schematic diagram of another embodiment of a data transmission method according to an embodiment of the present invention;
FIG. 17 is a schematic diagram of an embodiment of a core network node in data transmission according to an embodiment;
FIG. 18 is a schematic diagram of another embodiment of a core network node in data transmission according to an embodiment;
FIG. 19 is a schematic diagram of another embodiment of a core network node in data transmission according to an embodiment;
FIG. 20 is a schematic diagram of another embodiment of a core network node in data transmission according to an embodiment;
FIG. 21 is a schematic diagram of another embodiment of a core network node in data transmission according to an embodiment;
FIG. 22 is a schematic diagram of another embodiment of a core network node in data transmission according to an embodiment;
FIG. 23 is a schematic diagram of another embodiment of a core network node in data transmission according to an embodiment;
FIG. 24 is a schematic diagram of another embodiment of a core network node in data transmission according to an embodiment;
FIG. 25 is a schematic diagram of another embodiment of a core network node in data transmission according to an embodiment;
FIG. 26 is a schematic diagram of an embodiment of user equipment in data transmission according to an embodiment;
FIG. 27 is a schematic diagram of another embodiment of user equipment in data transmission according to an embodiment;
FIG. 28 is a schematic diagram of another embodiment of user equipment in data transmission according to an embodiment;
FIG. 29 is a schematic diagram of another embodiment of user equipment in data transmission according to an embodiment;
FIG. 30 is a schematic diagram of another embodiment of user equipment in data transmission according to an embodiment;
FIG. 31 is a schematic diagram of another embodiment of user equipment in data transmission according to an embodiment;
FIG. 31A is a schematic diagram of another embodiment of user equipment in data transmission according to an embodiment;
FIG. 32 is a schematic structural diagram of a core network node according to an embodiment of the present invention;
FIG. 33 is a schematic structural diagram of user equipment according to an embodiment of the present invention; and
FIG. 34 is a schematic diagram of an embodiment of a data transmission system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are only some but not all of the embodiments of the present invention. All other embodiments obtained by persons skilled in the art based on the embodiments of the present invention without creative efforts shall fall within the protection scope of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

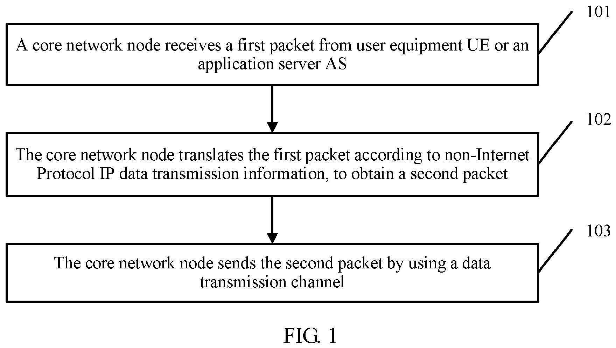

Embodiments of the present invention provide a data transmission method, so that a packet can be translated and transmitted in a non-IP data transmission scenario, and a data bearer can be established according to non-IP data transmission information. In addition, the embodiments of the present invention further provide a corresponding data transmission system and a related apparatus. Referring to FIG. 1 to FIG. 34, the following separately gives detailed description by using specific embodiments.

The data transmission method and a data bearer establishment method that are provided in the embodiments of the present invention are applicable to a wireless communications system. In the embodiments of the present invention, an example in which the methods are applied to an EPS wireless communications system is used to analyze and describe the methods. This does not constitute a limitation on the present invention.

An embodiment of the present invention provides a data transmission method. For ease of description, the description is given from a perspective of a core network node. For example, the core network node may be specifically a serving gateway (Serving Gateway, S-GW for short) and a packet data network gateway (Packet Data Network Gateway, P-GW for short).

Referring to FIG. 1, FIG. 1 is a schematic flowchart of a data transmission method according to an embodiment of the present invention. The data transmission method may include the following steps.

101. A core network node receives a first packet from user equipment UE or an application server AS.

In this embodiment, in a non-IP data transmission scenario, the user equipment (User Equipment, UE for short) or the application server (Application Server, AS for short) sends the first packet to the core network node.

102. The core network node translates the first packet according to non-Internet Protocol IP data transmission information, to obtain a second packet.

In this embodiment, the core network node receives an attach request sent by the UE that may add the non-IP data transmission information to the request. The core network node translates the received first packet according to the non-IP data transmission information, to obtain the second packet obtained after translation is performed.

103. The core network node sends the second packet by using a data transmission channel.

In this embodiment, if the core network node receives the first packet sent by the UE, the core network node sends, to the AS by using the data transmission channel, the second packet obtained after translation is performed. If the core network node receives the first packet sent by the AS, the core network node sends, to the UE by using the data transmission channel, the second packet obtained after translation is performed.

Establishing the data transmission channel may be establishing a data transmission bearer. Alternatively, data transmission may be implemented by means of signaling exchange.

In this embodiment of the present invention, a method for translating a packet by using non-IP data transmission information is provided. The core network node translates the first packet, and sends, to a target device, the second packet obtained after translation is performed. So far, a non-IP data transmission process is completed. Packet translation is performed to support effective non-IP data transmission, so that complexity and costs of the UE are significantly reduced. In addition, a size of data transmitted on a network side is reduced, so that network resources are saved.

For ease of understanding, several specific implementations are provided for the embodiment corresponding to FIG. 1. When neither the UE nor the AS supports an IP protocol, non-IP data is transmitted on both an air interface and an SGi interface. The SGi interface is mainly used to establish a tunnel from a P-GW to an external Internet, and transmit user plane data.

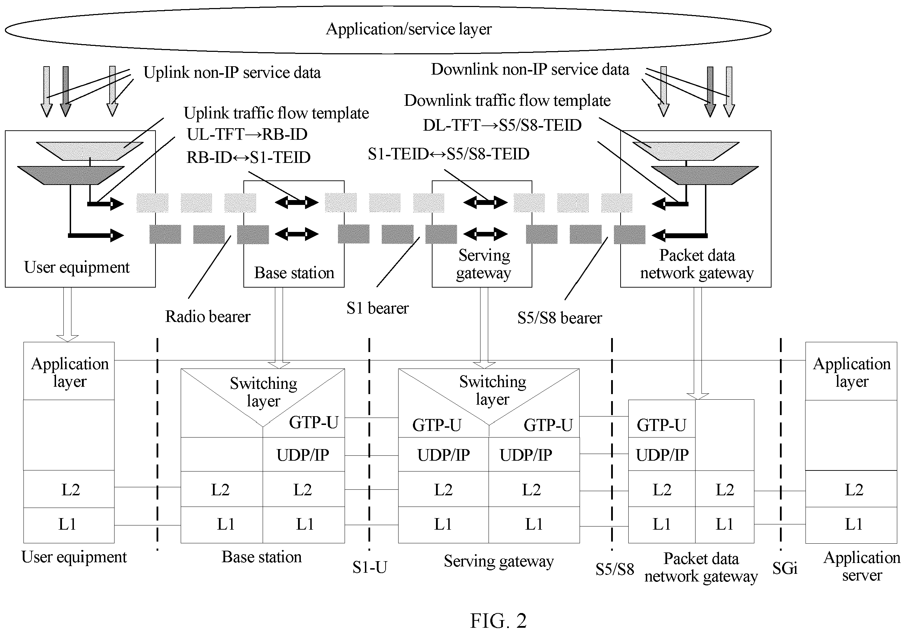

Referring to FIG. 2, FIG. 2 is a schematic diagram of a non-IP service data flow transmission process in an EPS network according to an embodiment of the present invention. Non-IP data is transmitted by using a non-IP data bearer established between UE and a P-GW. However, performing transmission by using the non-IP data bearer is only an implementation of this solution, and there is another implementation means in actual application. Herein, this manner is used as an example for description.

For an uplink non-IP service data flow, the UE stores a mapping relationship between an uplink traffic flow template (Uplink Traffic Flow Template, UL-TFT for short) and a radio bearer (Radio Bearer, RB for short); maps a different service data flow to a corresponding RB according to the UL-TFT, where the mapping relationship may be implemented according to an RB identity (identity, ID for short); and sends the data to a base station by using the RB. A packet filter in the UL-TFT may be used to group the data based on information such as a UE identifier, an AS identifier, a protocol port number, or a service identifier. The base station associates the RB with a corresponding S1 bearer. Specifically, the base station may perform association by using the RB-ID and an SI-tunnel endpoint identifier (Tunnel endpoint ID, TEID for short). After successfully associating the RB with the S 1 bearer, the base station encapsulates the non-IP data into a GPRS Tunneling Protocol-User Plane (GPRS Tunneling Protocol for the user plane, GTP-U for short), and sends the data to an S-GW by using the S1 bearer. The S-GW associates the S1 bearer with a corresponding S5/S8 bearer. Specifically, the S-GW may perform association by using the S1-TEID and an S5/S8-TEID, and send the data to the P-GW by using the S5/S8 bearer. The P-GW parses out the non-IP data encapsulated in the GTP-U, and sends the non-IP data to an AS by using a tunnel or in a signaling transmission manner. So far, uplink non-IP service data flow transmission is completed.

Similarly, for a downlink non-IP service data flow, the P-GW maps a different service data flow to a corresponding S5/S8 bearer according to a downlink traffic flow template (Downlink Traffic Flow Template, DL-TFT for short), encapsulates the non-IP data into a GTP-U, and sends the data to the UE by using the S5/S8 bearer, an S1 bearer, and an RB in sequence. A downlink non-IP service data flow transmission process is similar to uplink non-IP data flow transmission described above. A packet filter in the DL-TFT may be used to group the data based on information such as a UE identifier, an AS identifier, a protocol port number, or a service identifier.

It may be understood that a bearer association establishment manner in the downlink non-IP service data flow transmission process and a bearer association establishment manner in the uplink non-IP service data flow transmission process are similar to each other, and both may be implemented by means of TEID association. Therefore, details are not repeatedly described herein.

If the UE does not support bearer association and mapping, the base station completes association and mapping between an uplink non-IP data flow and a bearer. The base station maps, to a corresponding S1 bearer according to the UL-TFT, a non-IP service data flow received from the UE, encapsulates the non-IP data into a GTP-U, and sends the data to the SGW by using the S1 bearer. Subsequent operations are similar to those in the method described in the foregoing embodiment. Therefore, details are not repeatedly described herein.

When the UE has only one bearer that can be used for non-IP data transmission, the UE and the P-GW may not perform packet filtering by using the UL-TFT or the DL-TFT, but associate all received non-IP data flows with and map all the received non-IP data flows to the unique non-IP data bearer.

Because neither the UE nor the AS supports an IP protocol, in this case, as shown in the figure, in the non-IP service data flow transmission process in the EPS network, a core network node does not need to perform IP translation.

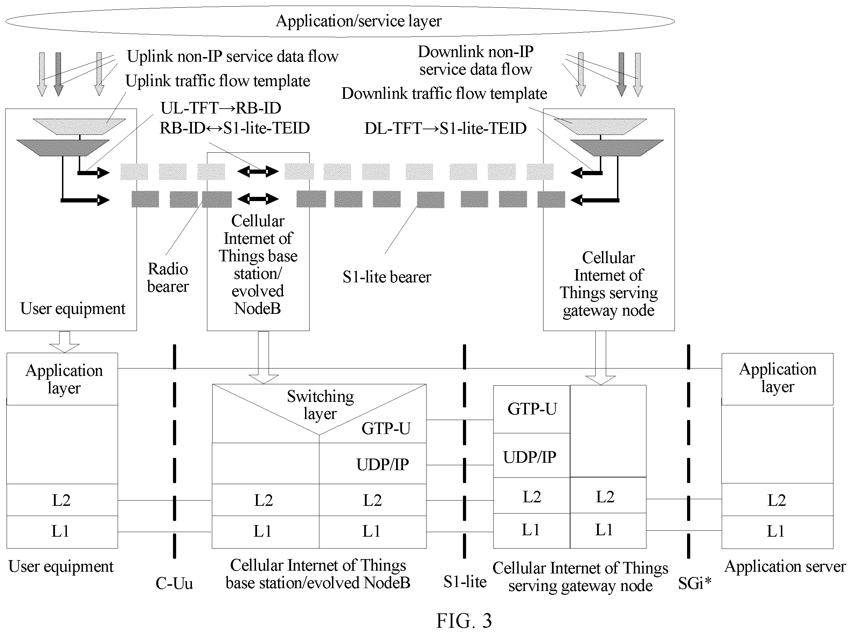

The foregoing embodiment describes a non-IP service data flow transmission manner in an EPS network. The following describes a non-IP service data flow transmission manner in a CloT system. Referring to FIG. 3, FIG. 3 is a schematic diagram of a non-IP service data flow transmission process in a non-roaming scenario in a CloT system according to an embodiment of the present invention.

In the non-roaming scenario, for an uplink non-IP service data flow, a non-IP data bearer is established between UE and a Cellular Internet of Things serving gateway node (CIoT Serving Gateway Node, C-SGN for short). The UE stores a mapping relationship between a UL-TFT and an RB, maps a different service data flow to a corresponding RB according to the UL-TFT, and sends the data to a base station by using the RB. A packet filter in the UL-TFT may be used to group the data based on information such as a UE identifier, an AS identifier, a protocol port number, or a service identifier. The base station associates the RB with a corresponding S1-lite bearer. After completing association, the base station encapsulates the non-IP data into a GTP-U, and sends the data to the C-SGN by using the S1-lite bearer. The C-SGN parses out the non-IP data encapsulated in the GTP-U, and sends the non-IP data to an AS by using a tunnel or in another manner.

Similarly, for a downlink non-IP service data flow, a C-SGN maps a different service data flow to a corresponding SI-lite bearer according to a DL-TFT, encapsulates the non-IP data into a GTP-U, and sends the non-IP data to UE by using the SI-lite bearer and an RB. A downlink non-IP service data flow transmission process is also similar to uplink non-IP data transmission described above. A packet filter in the DL-TFT may be used to group the data based on information such as a UE identifier, an AS identifier, a protocol port number, or a service identifier.

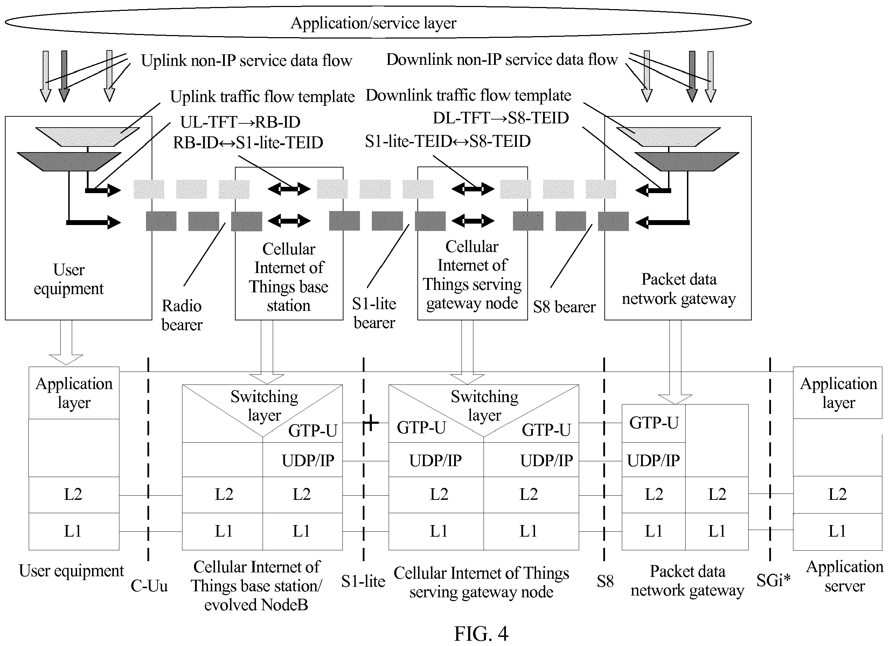

However, when a non-IP service data flow is transmitted in a roaming scenario in the CloT system, a P-GW needs to participate in, to implement bearer association and mapping in the CloT system. Referring to FIG. 4, FIG. 4 is a schematic diagram of a non-IP service data flow transmission process in a roaming scenario in a CloT system according to an embodiment of the present invention.

In the roaming scenario, for an uplink non-IP service data flow, a non-IP data bearer is established between UE and the P-GW. The UE stores a mapping relationship between a UL-TFT and an RB, maps a different service data flow to a corresponding RB according to the UL-TFT, and sends the data to a base station by using the RB. A packet filter in the UL-TFT may be used to group the data based on information such as a UE identifier, an AS identifier, a protocol port number, or a service identifier. The base station associates the RB with a corresponding S1-lite bearer. The base station encapsulates the non-IP data into a GTP-U, and sends the data to a C-SGN by using the SI-lite bearer. Then, the C-SGN associates the S1-lite bearer with a corresponding S8 bearer. The C-SGN sends the data to the P-GW by using the S8 bearer. The P-GW parses out the non-IP data encapsulated in the GTP-U, and sends the non-IP data to an AS by using a tunnel or in another manner.

Similarly, for a downlink non-IP service data flow, the P-GW maps a different service data flow to a corresponding S8 bearer according to a DL-TFT, encapsulates the non-IP data into a GTP-U, and sends the non-IP data to UE by using the S8 bearer, an S1-lite bearer, and an RB. A downlink non-IP service data flow transmission process is also similar to uplink non-IP data transmission described above. A packet filter in the DL-TFT may be used to group the data based on information such as a UE identifier, an AS identifier, a protocol port number, or a service identifier.

If the UE does not support bearer association and mapping, the base station completes association and mapping between an uplink non-IP data flow and a bearer. The base station maps, to a corresponding SI-lite bearer according to the UL-TFT, a non-IP service data flow received from the UE, encapsulates the non-IP data into a GTP-U, and sends the data to the C-SGN by using the S1-lite bearer.

If the UE has only one bearer used for non-IP data transmission, in the non-roaming scenario, the UE and the C-SGN may not perform packet filtering by using a TFT, but associate all received non-IP data flows with and map all the received non-IP data flows to the unique non-IP data bearer; or in the roaming scenario, the UE and the P-GW may not perform packet filtering by using a TFT, but associate all received non-IP data flows with and map all the received non-IP data flows to the unique non-IP data bearer.

Optionally, based on the embodiment corresponding to FIG. 1, in a first optional embodiment of the data transmission method provided in this embodiment of the present invention, the non-IP data transmission information specifically includes a packet data network PDN type, a service data parameter, and an IP support capability; or
the non-IP data transmission information specifically includes the PDN type and the service data parameter.

In this embodiment, IP data transmission information may include a packet data network (Packet Data Network, PDN for short) type, a service data parameter, and an IP support capability, or include a PDN type and a service data parameter.

When an institution establishes, in a public area, a network that covers a large area, there may be three choices: establishing a private network of the institution, using an existing public network, or using a combination thereof. A PDN is a packet switched service or a circuit switched service provided by a local or long-distance telecommunication bureau. A user may perform communication and connection by using the network established by the institution. The PDN type is used to indicate a specific network to which the UE needs to be connected, and whether the AS on the network side supports an IP address may be determined according to the network indicated by the PDN type.

The service data parameter is used to distinguish between different services at a data transmit end and a data receive end, and includes parameters such as a source IP address, a source port, a destination IP address, a destination port, and a transmission protocol. For example, a quintuple includes 192.168.1.1, 10000, UDP, 121.14.88.76, and 80. The quintuple means that a terminal whose IP address is 192.168.1.1 is connected, by using a port 10000 and a UDP protocol, to a terminal whose IP address is 121.14.88.76 and whose port is 80. In addition, the service data parameter may further include another parameter related to data transmission, for example, a service level and a protocol version number.

The transmission protocol includes different protocols used in data transmission in a wireless network. A dedicated protocol needs to be used in the wireless network. Because the IP protocol imposes a high requirement on memory and bandwidth, a running environment requirement of the IP protocol needs to be lowered for adaptation to a microcontroller, and low-power wireless connection is relatively difficult. Therefore, optimization processing needs to be performed on some protocols, for example, an IPv6 over Low-Power Wireless Personal Area Networks (IPv6 over Low-Power Wireless Personal Area Networks, 6LowPAN for short) protocol. The protocol is a Low-Rate Wireless Personal Area Networks standard based on a next generation Internet Protocol (Internet Protocol Version 6, IPv6 for short), and aims at introducing the IPv6 into a wireless personal area network in which the Institute of Electrical and Electronics Engineers (Institute of Electrical and Electronics Engineers, IEEE for short) 802.15.4 is used as a bottom-layer standard. The advent of the protocol promotes development of a short-range, low-rate, and low-power wireless personal area network.

In the 6LowPAN technology, a physical layer (Physical Layer, PHY for short) and a Media Access Control (Media Access Control, MAC for short) layer that are stipulated in the IEEE 802.15.4 are used at a bottom layer, and the IPv6 protocol is used at a network layer. In the IPv6 protocol, a payload length supported by the MAC layer is greater than a payload length that can be provided by the bottom layer of the 6LowPAN. To implement seamless splicing of the MAC layer and the network layer, a working group of the 6LowPAN suggests adding a network adaptation layer between the network layer and the MAC layer.

A protocol stack of the 6LowPAN is shown in the following table:

**Table 1**

| |
|---|
| IPv6 network layer |
| Adaptation layer (routing) |
| IEEE 802.15.4 (Media Access Control layer) |
| IEEE 802.15.4 (physical layer) |

The network adaptation layer is added, so that functions such as header compression, fragmentation, and reassembly, and working such as mesh routing and forwarding can be completed.

The IP support capability indicates whether the UE supports an IP address. The IP support capability of the UE may be notified to the network side by using the attach request sent by the UE, so that the network side may perform data transmission according to whether the UE supports an IP address.

In addition, in this embodiment of the present invention, the non-IP data transmission information is specifically described. Packet translation is performed according to the PDN type, the service data parameter, and the IP support capability in the non-IP data transmission information, so that the solution has higher feasibility in actual application, and flexibility of the solution is enhanced. Because different non-IP data transmission information may bring different translation manners, in this solution of the present invention, the non-IP data transmission information is further limited.

Optionally, based on FIG. 1 or the first embodiment corresponding to FIG. 1, in a second optional embodiment of the data transmission method provided in this embodiment of the present invention, that the core network node sends the second packet by using a data transmission channel may include the following step:
The core network node sends the second packet by using a data transmission bearer.

In this embodiment, the core network node may send, by using the data transmission bearer, the second packet obtained after translation is performed. The data bearer may be specifically a non-IP data bearer.

In an EPS network, the core network node includes a mobility management entity (Mobility Management Entity, MME for short), a home subscriber server (Home Subscriber Server, HSS for short), and a P-GW. If the core network node receives the first packet sent by the UE, the core network node sends, to the AS, the second packet obtained after translation is performed. If the core network node receives the first packet sent by the AS, the core network node sends, to the UE, the second packet obtained after translation is performed.

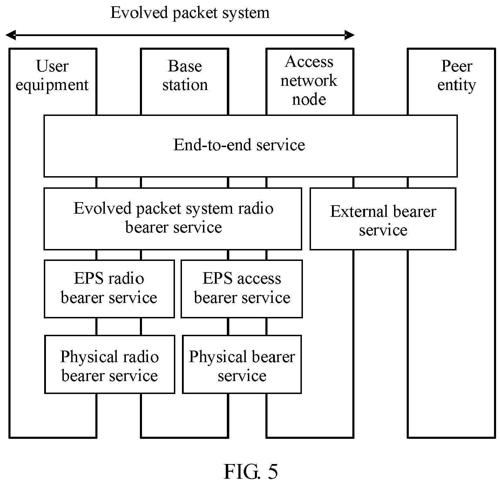

For the EPS network, to implement end-to-end quality of service (Quality of Service, QoS for short), a bearer service for which an attribute and a function are specifically and explicitly defined is established and used from a service start point to a service end point in the EPS network. Different EPS bearers have different QoS. Referring to FIG. 5, FIG. 5 is a schematic diagram of a bearer model in an EPS network according to an embodiment of the present invention. A peer entity in the figure may be UE, a server, or the like. An end-to-end service is performed between UE and the peer entity. An EPS bearer service is established between the UE and a core network node, and an external bearer service is established between the core network node and the peer entity. The external bearer service herein is provided by a PDN connection. A PDN connectivity service is IP connectivity that is provided by an EPS network and that is between the UE and an external PDN of a public land mobile network (Public Land Mobile Network, PLMN for short). The PDN connectivity service may support transmission of one or more service data flows (Service Data Flow, SDF for short).

An EPS radio bearer service and a physical radio bearer service are established between the UE and a base station. An EPS access bearer service and a physical bearer service are established between the base station and the core network node. The core network node in this embodiment may be an MME and a P-GW.

An EPS bearer includes a default bearer and a dedicated bearer. The default bearer is established when the UE is connected to a PDN. The bearer remains established throughout a lifetime of the PDN connection, to provide the UE with always-on IP connectivity to the PDN. The dedicated bearer is any bearer that is established for connectivity to the PDN and that is different from the default bearer.

In the CloT system, in a non-roaming state, the core network node includes a C-SGN and an HSS; or in a roaming state, the core network node includes a C-SGN, an HSS, and a P-GW. A specific implementation means is similar to a process in which the core network node sends the second packet in the EPS network. Therefore, details are not repeatedly described herein.

It may be understood that transmitting the second packet by establishing the non-IP data bearer is an implementation of this solution. In actual application, the packet may be further transmitted by using signaling. For example, in a disk operating system (Disk Operating System, DOS for short) command, a network connection quantity is tested by using a Packet Internet Groper (Packet Internet Grope, PING for short). A machine in a network has a unique determined IP address. After the machine sends a packet to a destination IP address, a peer needs to return a packet with a same size. According to the returned packet, existence of a destination host may be determined, and an operating system of the destination host and the like may be preliminarily determined. Connectivity of the network may be checked by using the PING. This greatly helps a user analyze and determine a network fault.

Further, in this embodiment of the present invention, after performing packet translation, the core network node may send, by using the established data transmission bearer, a packet obtained after translation is performed. Receiving and sending a packet by using the data transmission bearer may improve data transmission efficiency and network quality of service, so as to enhance user experience.

Optionally, based on the second embodiment corresponding to FIG. 1, in a third optional embodiment of the data transmission method provided in this embodiment of the present invention, before the core network node sends the second packet by using the data transmission bearer, the method may further include the following steps:
The core network node receives the non-IP data transmission information sent by the UE;
the core network node establishes the data transmission bearer according to the non-IP data transmission information; and
the core network node sends non-IP data bearer information to the UE, where the non-IP data bearer information is used to notify the UE that the data transmission bearer is successfully established.

In this embodiment, before sending, by using the data bearer, the second packet obtained after translation is performed, the core network node further needs to establish a non-IP data bearer. The core network node receives the non-IP data transmission information sent by the UE, and establishes the data transmission bearer according to the information. After successfully establishing the data bearer, the core network node sends the non-IP data bearer information to the UE, so that the UE determines that the data transmission bearer is successfully established.

The data transmission bearer may also be understood as the non-IP data bearer.

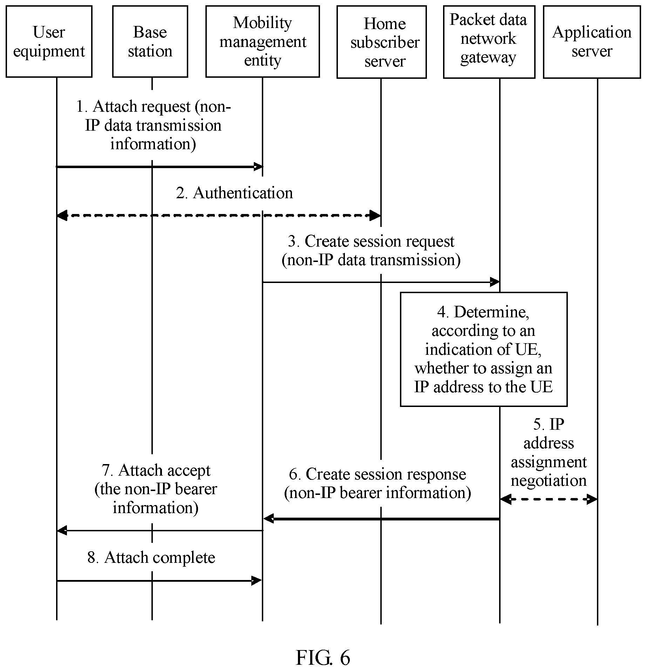

Referring to FIG. 6, FIG. 6 is a schematic diagram of a non-IP data bearer establishment process in an EPS network according to an embodiment of the present invention. Specific steps are as follows:
UE provides non-IP data transmission information to a network by using an attach request message. The non-IP data transmission information includes a PDN type, a service data parameter, an IP support capability, and the like. That the UE obtains the non-IP data transmission information includes but is not limited to the following methods: The UE obtains information such as the service data parameter after interacting with an application server end, or the UE locally pre-configures information such as the PDN type, the service data parameter, and the IP support capability.

A network side performs authentication on the UE according to a requirement. The authentication is used to verify whether a user has permission to access a system. In conventional authentication, verification is performed by using a password. A prerequisite of this manner is that each user obtaining the password has been authorized. At present, there is a more reliable authentication manner, and a current mainstream authentication manner is to verify whether a digital signature is correct by means of authentication and authorization.

An MME on the network side selects, according to the non-IP data transmission information provided by the UE, a P-GW that supports non-IP data transmission. The MME determines the corresponding P-GW according to the PDN type in the non-IP data transmission information, and initiates a create session request. The P-GW determines, according to the non-IP data transmission information provided by the UE, whether to assign an IP address to the UE.

If neither the UE nor the AS supports an IP, the P-GW may not assign an IP address to the UE, or assign an internal IP address that is only used for bearer association and mapping. If the UE does not support an IP, but the AS supports the IP, the P-GW may negotiate with the AS about IP address assignment for the UE, and an assigned IP address is used by the AS to address the UE, and is used for bearer association and mapping. If the UE and the AS support an IP, but do not transmit conventional IP data, the P-GW also needs to assign an IP address to the UE. If the UE supports an IP, but the AS does not support the IP, the P-GW assigns an IP address to the UE.

After the P-GW negotiates with the AS about IP address assignment for the UE, the P-GW establishes a bearer for non-IP data transmission of the UE according to a local policy or a Policy and Charging Control (Policy and Charging Control, PCC for short) rule from a policy and charging rules function (Policy and Charging Rules Function, PCRF for short), and feeds back bearer information, that is, non-IP data bearer information, by using a create session response message.

The non-IP data bearer information may include information such as an EPS bearer identity, a P-GW address, and a TEID. The MME sends an attach accept message to the UE. The attach accept message includes the non-IP data bearer information.

The foregoing process is implemented in the EPS network. For a CloT system, in a non-roaming scenario, a C-SGN completes functions of the MME, an S-GW, and the P-GW in the non-IP data bearer establishment process; or in a roaming scenario, a C-SGN completes functions of the MME and an S-GW in the non-IP data bearer establishment process, and IP address assignment is still completed by the P-GW.

Further, in this embodiment of the present invention, the following is implemented: The UE provides the non-IP data transmission information to the core network, and the core network node determines IP address assignment for the UE and performs bearer establishment, according to the non-IP data transmission information provided by the UE. Non-IP data can be transmitted between the UE and the AS based on the non-IP data bearer that is established by means of negotiation. Compared with the prior art, in this solution of the present invention, the non-IP data bearer can be established between the UE and the core network node by means of negotiation, so that feasibility of the solution is improved, flexibility of the solution is enhanced, and an achievable range of the solution is wider.

Optionally, based on the third embodiment corresponding to FIG. 1, in a fourth optional embodiment of the data transmission method provided in this embodiment of the present invention, after the core network node receives the non-IP data transmission information sent by the UE, the method may further include the following step:
If the core network node determines, according to the non-IP data transmission information, to assign the IP address to the UE, the core network node sends the IP address to the UE.

In this embodiment, the core network node receives the non-IP data transmission information sent by the UE. Specifically, the core network node may determine, according to the IP support capability in the non-IP data transmission information, whether to assign an IP address to the UE. If the UE has the IP support capability, the core network node negotiates with the AS for assigning an IP address to the UE, and sends the IP address to the UE.

Furthermore, in this embodiment of the present invention, the core network node determines, according to the non-IP data transmission information, whether to assign an IP address to the UE. Even if the UE does not need an IP service, the core network node may consider assigning an IP address to the UE instead of totally not assigning an IP address. The IP address is used by the AS to address the UE based on the IP address. An external device addresses the UE by using the IP address, so that accuracy and efficiency of addressing can be improved, a transmission delay can be reduced, and transmission reliability can be enhanced.

Optionally, based on the embodiment corresponding to FIG. 1, in a fifth optional embodiment of the data transmission method provided in this embodiment of the present invention, the first packet is an IP packet, and the second packet is a non-IP packet; or
the first packet is the non-IP packet, and the second packet is the IP packet.

In this embodiment, when receiving an IP packet, the core network node may translate the IP packet into a non-IP packet. When receiving a non-IP packet, the core network node may translate the non-IP packet into an IP packet.

The translation process may be implemented based on the non-IP data transmission information, and a corresponding translation manner is determined according to specific non-IP data transmission information.

In addition, in this embodiment of the present invention, the core network node may perform bidirectional packet translation, that is, may translate an IP packet into a non-IP packet, and also translate a non-IP packet into an IP packet. In actual application, translation applicability is improved, so that IP packet translation and non-IP packet translation are more convenient.

Optionally, based on FIG. 1 and the first to the fifth optional embodiments corresponding to FIG. 1, in a sixth optional embodiment of the data transmission method provided in this embodiment of the present invention, that the core network node translates the first packet according to non-Internet Protocol IP data transmission information, to obtain a second packet may include the following step:
The core network node translates the IP packet into a non-IP packet according to the non-IP data transmission information; or
the core network node translates the non-IP packet into an IP packet according to the non-IP data transmission information.

In this embodiment, the following several scenarios may be included: When receiving an IP packet sent by the UE, the core network node translates the IP packet into a non-IP packet, and sends the non-IP packet to the AS; and when receiving a non-IP packet sent by the UE, the core network node translates the non-IP packet into an IP packet, and sends the IP packet to the AS. The process is an uplink process, that is, a process in which the UE sends data to the AS.

For a downlink process, when receiving an IP packet sent by the AS, the core network node translates the IP packet into a non-IP packet, and sends the non-IP packet to the UE; and when receiving a non-IP packet sent by the AS, the core network node translates the non-IP packet into an IP packet, and sends the IP packet to the UE.

Further, in this embodiment of the present invention, the core network node performs IP packet translation or non-IP packet translation according to the non-IP data transmission information, so that translation can be implemented by using specific non-IP data transmission information, and translation efficiency can be improved.

Optionally, based on the sixth embodiment corresponding to FIG. 1, in a seventh optional embodiment of the data transmission method provided in this embodiment of the present invention, that a core network node receives a first packet from user equipment UE or an application server AS may include the following step:
The core network node receives the IP packet sent by the UE or the AS, where the IP packet carries an IP address of a sending party and an IP address of a receiving party.

That the core network node translates the IP packet into a non-IP packet according to the non-IP data transmission information may include the following step:
The core network node translates the IP addresses in the IP packet into an identifier in the non-IP packet, where the identifier is used to indicate the sending party and the receiving party of the non-IP packet.

That the core network node sends the second packet by using a data transmission channel may include the following step:
The core network node sends the non-IP packet by using the data transmission channel.

In this embodiment, if the core network node receives the IP packet sent by the AS, and the IP packet carries the IP address of the sending party and the IP address of the receiving party, the sending party is the AS, and the receiving party is the UE. The core network node translates a UE IP address in the IP packet into a UE identifier in the non-IP packet, and translates an AS IP address into an AS identifier, to complete IP packet translation. The AS identifier is used to indicate that the sending party is the AS, and the UE identifier is used to indicate that the receiving party is the UE. After obtaining the non-IP packet, the core network node sends the non-IP packet to the UE by using the data transmission channel.

Alternatively, if the core network node receives the IP packet sent by the UE, the sending party is the UE, and the receiving party is the AS. The core network node translates an AS IP address in the IP packet into an AS identifier in the non-IP packet, and translates a UE IP address into a UE identifier, to complete IP packet translation. After obtaining the non-IP packet, the core network node sends the non-IP packet to the AS by using the data transmission channel.

Optionally, based on the sixth embodiment corresponding to FIG. 1, in an eighth optional embodiment of the data transmission method provided in this embodiment of the present invention, that a core network node receives a first packet from user equipment UE or an application server AS may include the following step:
The core network node receives the non-IP packet sent by the UE or the AS, where the non-IP packet carries an identifier that is used to indicate a sending party and a receiving party.

That the core network node translates the non-IP packet into an IP packet according to the non-IP data transmission information may include the following step:
The core network node translates the identifier in the non-IP packet into IP addresses in the IP packet.

That the core network node sends the second packet by using a data transmission channel may include the following step:
The core network node sends the IP packet by using the data transmission channel.

In this embodiment, if the core network node receives the non-IP packet sent by the AS, and the non-IP packet carries the identifiers of the sending party and the receiving party, the sending party is the AS, and the receiving party is the UE. The core network node translates a UE identifier in the non-IP packet into a UE IP address in the IP packet, and translates an AS identifier into an AS IP address, to complete non-IP packet translation. After obtaining the IP packet, the core network node sends the IP packet to the UE by using the data transmission channel.

Alternatively, if the core network node receives the non-IP packet sent by the UE, the sending party is the UE, and the receiving party is the AS. The core network node translates a UE identifier in the non-IP packet into a UE IP address in the IP packet, and translates an AS identifier into an AS IP address, to complete non-IP packet translation. After obtaining the IP packet, the core network node sends the IP packet to the AS by means of the data transmission channel.

For ease of understanding, several specific implementations are provided for the seventh and the eighth optional embodiments corresponding to FIG. 1.

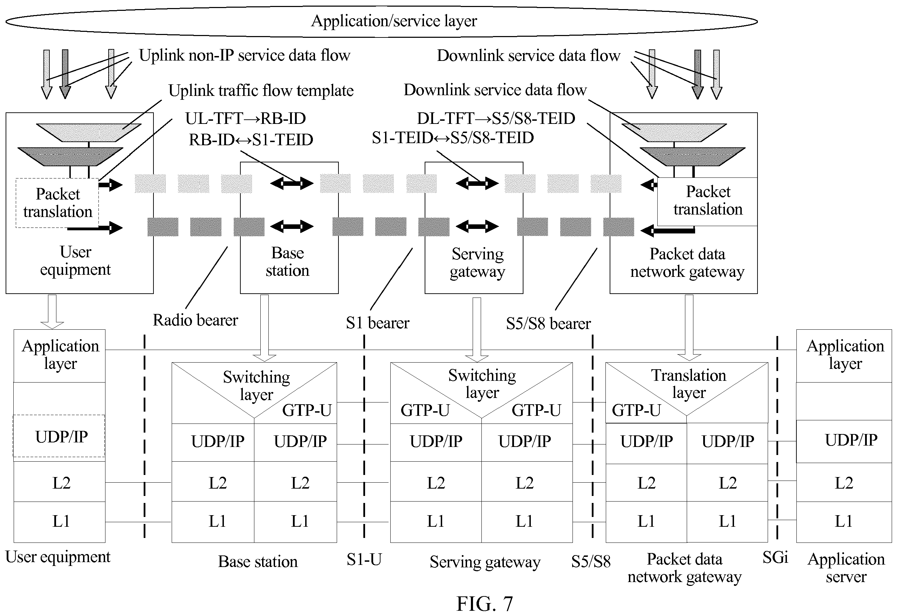

Referring to FIG. 7, FIG. 7 is another schematic diagram of a non-IP service data flow transmission process in an EPS network according to an embodiment of the present invention. UE may support an IP or may not support an IP, an AS supports the IP, non-IP data is transmitted between the UE and a P-GW, and IP data is transmitted on an SGi interface. However, performing transmission by using a non-IP data bearer is only an implementation of this solution, and there is another implementation means in actual application. Herein, this manner is used as an example for description.

For an uplink non-IP service data flow, the P-GW needs to assign an external IP address to the UE, but does not send the external IP address to the UE. The external IP address is used by the AS to address the UE.

The UE stores a mapping relationship between a UL-TFT and a radio bearer, maps a different service data flow to a corresponding RB according to the UL-TFT, and sends the data to a base station by using the RB. A packet filter in the UL-TFT may be used to group the data based on information such as a UE identifier, an AS identifier, a protocol port number, or a service identifier. The base station associates the RB with a corresponding S1 bearer, encapsulates the non-IP data into a GTP-U, and sends the data to an S-GW by using the S1 bearer. The S-GW associates the S1 bearer with a corresponding S5/S8 bearer, and sends the data to the P-GW by using the S5/S8 bearer. The P-GW parses out the non-IP data encapsulated in the GTP-U. The P-GW needs to perform packet translation, and then send, to the AS, a packet obtained after translation is performed. The P-GW stores a mapping relationship between a UE identifier and a UE IP address, and a mapping relationship between an AS identifier and an AS IP address. For an uplink non-IP packet received from the UE, the non-IP packet carries the UE identifier and the AS identifier. A User Datagram Protocol (User Datagram Protocol, UDP for short)/IP protocol header is added to the non-IP packet for translation into an IP packet. The address of the UE in the IP packet is the external IP address assigned by the P-GW, and the P-GW sends the IP packet to the AS.

Similarly, for a downlink IP service data flow, a packet filter in a DL-TFT of the P-GW performs data filtering based on an external IP address of the UE. The P-GW maps the IP service data flow corresponding to the UE to a corresponding S5/S8 bearer, encapsulates IP data into a GTP-U, and sends the IP data to the UE by using the S5/S8 bearer, an S1 bearer, and an RB in sequence. The P-GW stores a mapping relationship between a UE identifier and a UE IP address, and a mapping relationship between an AS identifier and an AS IP address. For a downlink IP packet received from the AS, the IP packet carries the UE IP address and the AS IP address. A UDP/IP header is removed from the IP packet for translation into a non-IP packet. The non-IP packet carries the corresponding UE identifier and AS identifier. Then, the non-IP packet is encapsulated into a GTP-U and is sent to a base station, and the base station sends the non-IP packet to the UE. If the UE supports the IP protocol, the UE restores the received non-IP packet to an IP packet according to non-IP transmission information, and submits the IP packet to an upper layer.

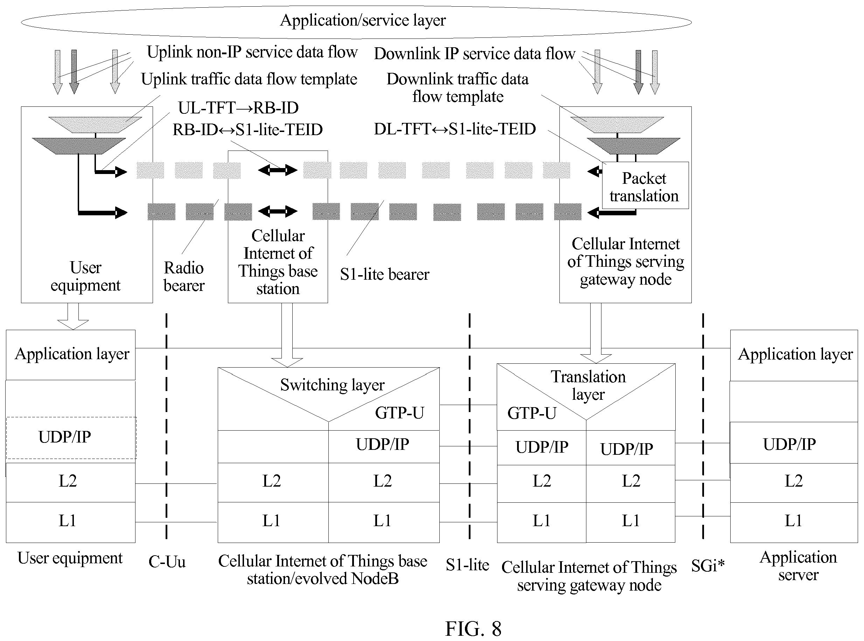

The foregoing embodiment describes a non-IP service data flow transmission manner in an EPS network. The following describes a non-IP service data flow transmission manner in a CloT system. Referring to FIG. 8, FIG. 8 is another schematic diagram of a non-IP service data flow transmission process in a non-roaming scenario in a CloT system according to an embodiment of the present invention.

In the CloT system, a non-IP service data flow transmission process is similar to that in the EPS network. In the non-roaming scenario, for an uplink non-IP service data flow, a non-IP data bearer is established between UE and a C-SGN. The UE stores a mapping relationship between a UL-TFT and an RB, maps different service data to a corresponding RB according to the UL-TFT, and sends the data to a base station by using the RB. A packet filter in the UL-TFT may be used to group the data based on information such as a UE identifier, an AS identifier, a protocol port number, or a service identifier. The base station associates the RB with a corresponding SI-lite bearer. After completing association, the base station encapsulates the non-IP data into a GTP-U, and sends the data to the C-SGN by using the SI-lite bearer. The C-SGN parses out the non-IP data encapsulated in the GTP-U, and sends the non-IP data to an AS by using a tunnel or in another manner.

Similarly, for a downlink IP service data flow, a C-SGN maps a service data flow of UE to a corresponding SI-lite bearer according to a DL-TFT, encapsulates IP data into a GTP-U, and sends the data to the UE by using the S1-lite bearer and an RB. A downlink IP service data flow transmission process is also similar to uplink non-IP data transmission described above. If the UE supports an IP protocol, the UE restores a received non-IP packet to an IP packet according to non-IP transmission information, and submits the IP packet to an upper layer.

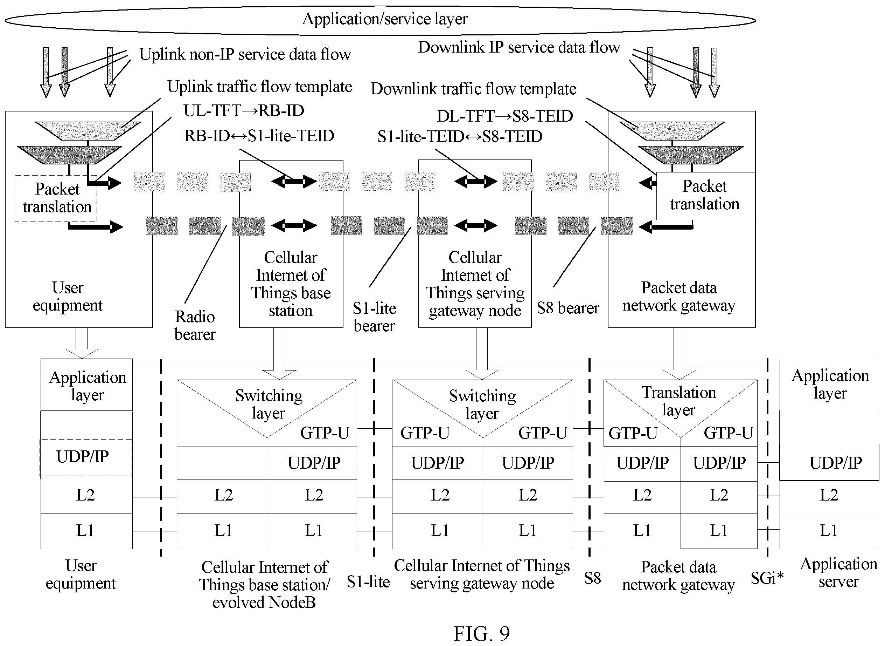

However, when a non-IP service data flow is transmitted in a roaming scenario in the CloT system, a P-GW needs to participate in, to implement bearer association and mapping in the CloT system. Referring to FIG. 9, FIG. 9 is a schematic diagram of a non-IP service data flow transmission process in a roaming scenario in a CloT system according to an embodiment of the present invention.

The roaming scenario is similar to the foregoing non-roaming scenario in the CloT system. A difference is as follows: Association and mapping between a downlink IP service data flow and a bearer in the CloT system, and packet translation are all performed by the P-GW.

If UE does not support bearer association and mapping, a base station completes association and mapping between an uplink non-IP data flow and a bearer. The base station maps, to a corresponding S1-lite bearer according to a UL-TFT, a non-IP service data flow received from the UE, encapsulates a non-IP packet into a GTP-U, and sends the data to a C-SGN by using the S1-lite bearer.

If the UE has only one bearer used for non-IP data transmission, in the non-roaming scenario, the UE and the C-SGN may not perform packet filtering by using a TFT, but associate all received non-IP data with and map all the received non-IP data to the unique non-IP data bearer; or in the roaming scenario, the UE and the P-GW may not perform packet filtering by using a TFT, but associate all received non-IP data with and map all the received non-IP data to the unique non-IP data bearer.

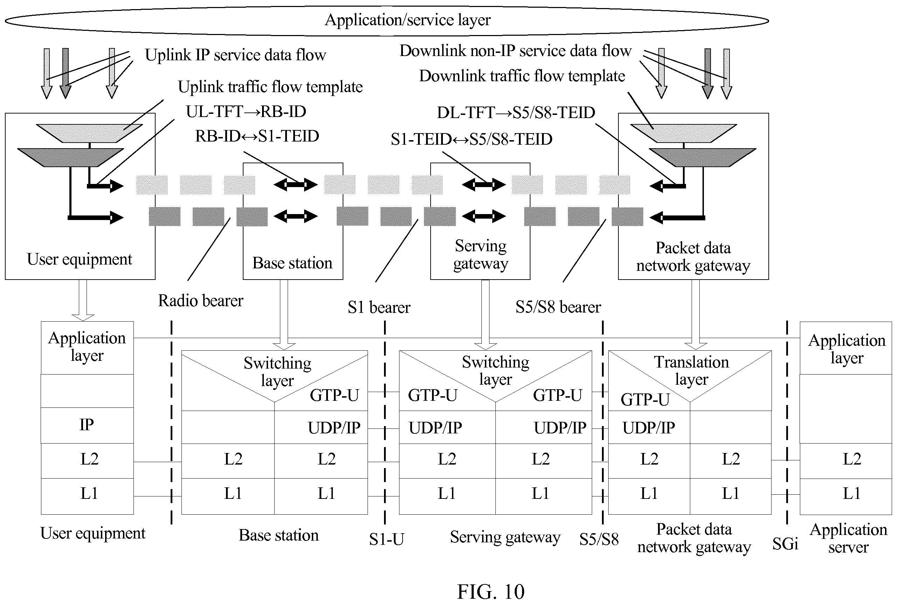

In the foregoing application scenario, UE supports or does not support an IP, and an AS supports the IP. The following describes a scenario in which the UE supports the IP but the AS does not support the IP, that is, IP data is transmitted between the UE and a P-GW, and non-IP data is transmitted on an SGi interface. Referring to FIG. 10, FIG. 10 is another schematic diagram of a non-IP service data flow transmission process in an EPS network according to an embodiment of the present invention.

For an uplink IP service data flow, the P-GW needs to assign an IP address to the UE, and sends the IP address to the UE. The UE stores a mapping relationship between a UL-TFT and a radio bearer, maps a different service data flow to a corresponding RB according to the UL-TFT, and sends the data to a base station by using the RB. A packet filter in the UL-TFT may be used to group the data based on information such as a UE identifier, an AS identifier, a protocol port number, or a service identifier. The base station associates the RB with a corresponding S1 bearer, encapsulates IP data into a GTP-U, and sends the data to an S-GW by using the S1 bearer. The S-GW associates the S1 bearer with a corresponding S5/S8 bearer, and sends the data to the P-GW by using the S5/S8 bearer. The P-GW parses out the IP data encapsulated in the GTP-U. The P-GW needs to perform packet translation, and then send, to the AS, a packet obtained after translation is performed. The P-GW stores a mapping relationship between a UE identifier and a UE IP address, and a mapping relationship between an AS identifier and an AS IP address. For an uplink IP packet received from the UE, the IP packet carries the UE IP address and the AS IP address. An IP header is removed from the IP packet for translation into a non-IP packet. The non-IP packet carries the UE identifier and the AS identifier, and the P-GW sends the non-IP packet to the AS.

Similarly, for a downlink non-IP service data flow, a packet filter in a DL-TFT of the P-GW performs data filtering based on an external IP address of the UE. The P-GW maps service data corresponding to the UE to a corresponding S5/S8 bearer, encapsulates the non-IP data into a GTP-U, and sends the data to the UE by using the S5/S8 bearer, an S1 bearer, and an RB in sequence. The P-GW stores a mapping relationship between a UE identifier and a UE IP address, and a mapping relationship between an AS identifier and an AS IP address. For a downlink non-IP packet received from the AS, the non-IP packet carries the UE identifier and the AS identifier. An IP header is added to the non-IP packet for translation into an IP packet. The IP packet carries the corresponding UE IP address and AS IP address. Then, the IP packet is encapsulated into a GTP-U and is sent to a base station, and the base station sends the IP packet to the UE.

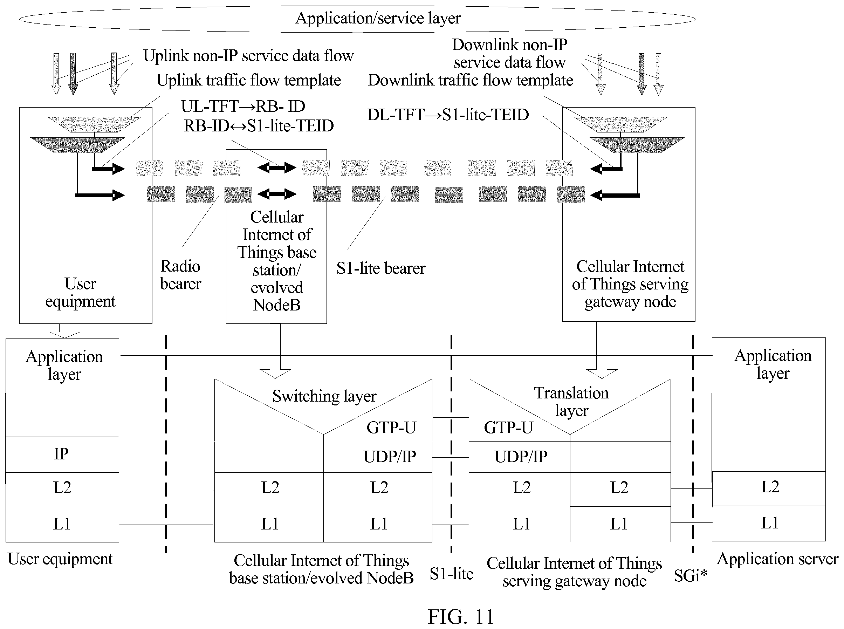

The foregoing embodiment describes a non-IP service data flow transmission manner in an EPS network. The following describes a non-IP service data flow transmission manner in a CloT system. Referring to FIG. 11, FIG. 11 is another schematic diagram of a non-IP service data flow transmission process in a non-roaming scenario in a CloT system according to an embodiment of the present invention.

In the CloT system, a non-IP service data flow transmission process is similar to that in the EPS network. In the non-roaming scenario, for an uplink IP service data flow, an IP data bearer is established between UE and a C-SGN. The UE stores a mapping relationship between a UL-TFT and an RB, maps different service data to a corresponding RB according to the UL-TFT, and sends the data to a base station by using the RB. A packet filter in the UL-TFT may be used to group the data based on information such as a UE identifier, an AS identifier, a protocol port number, or a service identifier. The base station associates the RB with a corresponding S1-lite bearer. After completing association, the base station encapsulates the IP data into a GTP-U, and sends the data to the C-SGN by using the SI-lite bearer. The C-SGN parses out the IP data encapsulated in the GTP-U, and sends the IP data to an AS by using a tunnel or in another manner.

Similarly, for a downlink non-IP service data flow, a C-SGN maps a service data flow of UE to a corresponding S1-lite bearer according to a DL-TFT, encapsulates the non-IP data into a GTP-U, and sends the non-IP data to the UE by using the S1-lite bearer and an RB. A downlink non-IP service data flow transmission process is also similar to uplink IP data transmission described above.

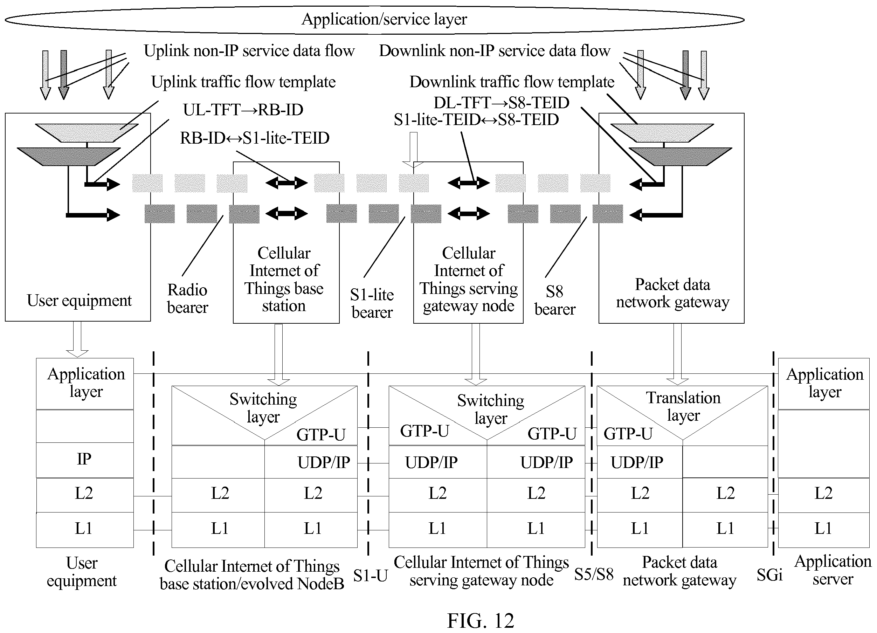

However, when a non-IP service data flow is transmitted in a roaming scenario in the CIoT system, a P-GW needs to participate in, to implement bearer association and mapping in the CloT system. Referring to FIG. 12, FIG. 12 is another schematic diagram of a non-IP service data flow transmission process in a roaming scenario in a CloT system according to an embodiment of the present invention.

The roaming scenario is similar to the foregoing non-roaming scenario in the CloT system. A difference is as follows: Association and mapping between a downlink non-IP service data flow and a bearer in the CloT system, and packet translation are all performed by the P-GW.

If UE does not support bearer association and mapping, a base station completes association and mapping between an uplink IP data flow and a bearer. The base station maps, to a corresponding S1-lite bearer according to a UL-TFT, an IP service data flow received from the UE, encapsulates an IP packet into a GTP-U, and sends the data to a C-SGN by using the SI-lite bearer.

If the UE has only one bearer used for non-IP data transmission, in the non-roaming scenario, the UE and the C-SGN may not perform packet filtering by using a TFT, but associate all received non-IP data with and map all the received non-IP data to the unique non-IP data bearer; or in the roaming scenario, the UE and the P-GW may not perform packet filtering by using a TFT, but associate all received non-IP data with and map all the received non-IP data to the unique non-IP data bearer.

Further, in this embodiment of the present invention, association and mapping between a non-IP service data flow and a bearer, and IP packet translation and non-IP packet translation are performed between the UE and the core network node, to support effective transmission of a non-IP packet. When a bearer corresponding to a non-IP service data flow is established, considering QoS of non-IP data transmission may provide better QoS guarantee for non-IP data transmission. In addition, supporting IP packet translation and non-IP packet translation also reflects feasibility of the solution in actual application.

Optionally, based on the sixth embodiment corresponding to FIG. 1, in a ninth optional embodiment of the data transmission method provided in this embodiment of the present invention, that a core network node receives a first packet from user equipment UE or an application server AS may include the following step:
The core network node receives the IP packet sent by the AS.

That the core network node translates the IP packet into a non-IP packet according to the non-IP data transmission information may include the following steps:
The core network node compresses a header of the IP packet according to the non-IP data transmission information, to obtain compressed header information;
the core network node splits the IP packet into multiple IP sub-packets according to the non-IP data transmission information; and
the core network node adds the compressed header information to each IP sub-packet, to obtain multiple non-IP sub-packets.

That the core network node sends the second packet by using a data transmission channel may include the following step:
The core network node sends the non-IP packet by using the data transmission channel, where the non-IP packet includes the multiple non-IP sub-packets.

In this embodiment, for downlink data transmission, the core network node receives the IP packet from the AS, compresses the header according to the non-IP information, splits payload of the IP packet into multiple sub-packets, and adds a compressed header to each sub-packet, to obtain multiple non-IP sub-packets.

Specifically, when receiving the IP packet sent by the UE and the non-IP data transmission information sent by the UE, the core network node determines, according to the service data parameter in the non-IP data transmission information, a protocol type used in data transmission. The core network node splits the IP packet into multiple IP sub-packets according to a specific protocol type. Each IP sub-packet carries compressed header information. The compressed header information includes a fragment number that is used for packet reassembly. The core network node reassembles the multiple IP sub-packets in sequence according to the fragment number in the compressed header information, and compresses header information of an IP packet obtained by means of reassembly, to obtain a non-IP packet. The core network node sends the non-IP packet to the AS by using the data transmission channel.

Likewise, similar to the foregoing process, when receiving the IP packet sent by the AS, the core network node splits the IP packet according to the service data parameter, and translates the IP packet into a non-IP packet.

Optionally, based on the sixth embodiment corresponding to FIG. 1, in a tenth optional embodiment of the data transmission method provided in this embodiment of the present invention, that a core network node receives a first packet from user equipment UE or an application server AS may include the following step:
The core network node receives the non-IP sub-packets sent by the UE.

That the core network node translates the non-IP packet into an IP packet according to the non-IP data transmission information may include the following step:
The core network node decompresses, according to the non-IP data transmission information, compressed header information carried in the non-IP sub-packets, to obtain IP header information; and
the core network node reassembles the multiple received non-IP sub-packets into one IP packet according to the non-IP data transmission information, where the IP packet carries the IP header information obtained by means of decompression.

That the core network node sends the second packet by using a data transmission channel may include the following step:
The core network node sends the IP packet by using the data transmission channel.

In this embodiment, for uplink data transmission, the core network node receives the multiple non-IP packets that are obtained after the UE performs header compression and fragmentation; performs header decompression according to the non-IP information, to obtain an IP header; reassembles, into one packet, the multiple non-IP packets that are obtained by means of fragmentation; and adds the IP header to the packet, to obtain a complete IP packet.

Specifically, when receiving non-IP sub-packets sent by the UE and the non-IP data transmission information sent by the UE, the core network node determines, according to the service data parameter in the information, a protocol type used in data transmission. The core network node reassembles the multiple non-IP sub-packets into one non-IP packet according to a specific protocol type. Each non-IP sub-packet may carry a fragment number. The non-IP sub-packets are reassembled according to the fragment number. A non-IP packet obtained by means of reassembly does not carry compressed header information. Then, the core network node generates header information for the non-IP packet, to obtain an IP packet, and sends the IP packet to the AS by using the data transmission channel.

Likewise, similar to the foregoing process, when receiving non-IP sub-packets sent by the AS, the core network node reassembles a non-IP packet according to the service data parameter, and translates the non-IP packet obtained by means of reassembly into an IP packet.

For ease of understanding, several specific implementations are provided for the ninth and the tenth optional embodiments corresponding to FIG. 1.

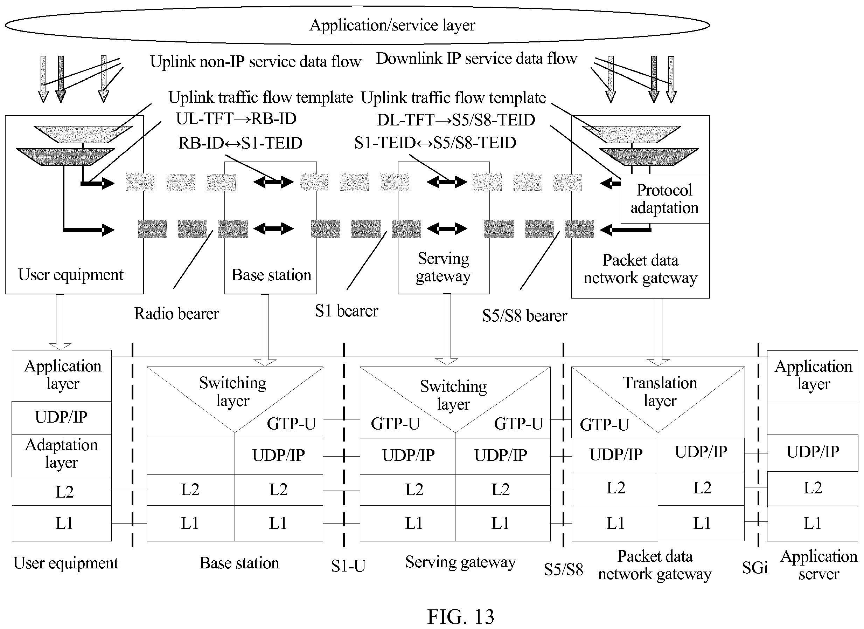

Referring to FIG. 13, FIG. 13 is another schematic diagram of a non-IP service data flow transmission process in an EPS network according to an embodiment of the present invention. Both UE and an AS support an IP. However, a network side does not perform conventional IP data transmission, but performs data transmission based on protocol optimization.

For an uplink non-IP service data flow, a P-GW needs to assign an external IP address to the UE, and sends the external IP address to the UE. The external IP address is used by the AS to address the UE.

The UE stores a mapping relationship between a UL-TFT and a radio bearer, maps a different service data flow to a corresponding RB according to the UL-TFT, and sends the data to a base station by using the RB. A packet filter in the UL-TFT may be used to group the data based on information such as a UE identifier, an AS identifier, a protocol port number, or a service identifier. The base station associates the RB with a corresponding S1 bearer, encapsulates the non-IP data into a GTP-U, and sends the data to an S-GW by using the S1 bearer. The S-GW associates the S1 bearer with a corresponding S5/S8 bearer, and sends the data to the P-GW by using the S5/S8 bearer. The P-GW parses out the non-IP data encapsulated in the GTP-U. The P-GW needs to perform packet translation, and then send, to the AS, a packet obtained after translation is performed. The P-GW needs to support protocol adaptation to non-IP data transmission that is based on a protocol such as 6LowPAN. Specifically, for the uplink non-IP service data flow received from the UE, the P-GW obtains IP packet header information by means of decompression, reassembles multiple non-IP packets obtained by means of fragmentation, to obtain an IP packet, and forwards the IP packet to the AS.

Similarly, for a downlink IP service data flow, a packet filter in a DL-TFT of a P-GW performs data filtering based on an external IP address of the UE, and there is no need to define a new TFT. The P-GW maps service data corresponding to the UE to a corresponding S5/S8 bearer. For the downlink IP service data flow received from the AS, the P-GW can fragment a packet, compress a header of the packet, translate the packet into a non-IP packet that can be identified by the UE, encapsulate the non-IP packet into a GTP-U, and send the non-IP packet to the UE.

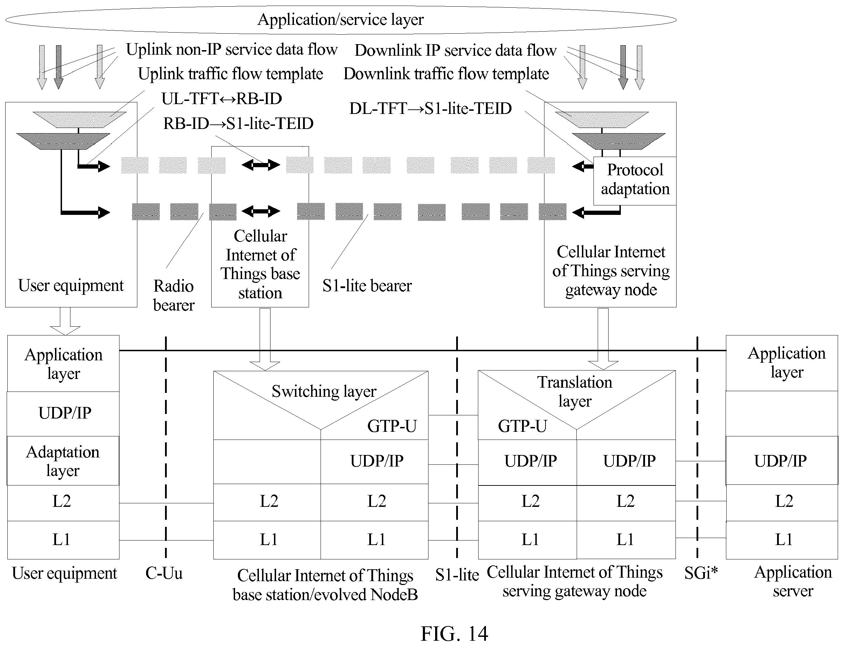

The foregoing embodiment describes a non-IP service data flow transmission manner in an EPS network. The following describes a non-IP service data flow transmission manner in a CIoT system. Referring to FIG. 14, FIG. 14 is another schematic diagram of a non-IP service data flow transmission process in a non-roaming scenario in a CloT system according to an embodiment of the present invention.

In the CIoT system, a non-IP service data flow transmission process is similar to that in the EPS network. In the non-roaming scenario, for an uplink non-IP service data flow, a non-IP data bearer is established between UE and a C-SGN. The UE stores a mapping relationship between a UL-TFT and an RB, maps different service data to a corresponding RB according to the UL-TFT, and sends the data to a base station by using the RB. A packet filter in the UL-TFT may be used to group the data based on information such as a UE identifier, an AS identifier, a protocol port number, or a service identifier. The base station associates the RB with a corresponding SI-lite bearer. After completing association, the base station encapsulates the non-IP data into a GTP-U, and sends the data to the C-SGN by using the SI-lite bearer. The C-SGN needs to support protocol adaptation to non-IP data transmission that is based on a protocol such as 6LowPAN. Specifically, for the uplink non-IP service data flow received from the UE, the C-SGN obtains IP packet header information by means of decompression, reassembles multiple non-IP packets obtained by means of fragmentation, to obtain an IP packet, and forwards the IP packet to the AS.

Similarly, for a downlink IP service data flow, a C-SGN maps a service data flow of UE to a corresponding S1-lite bearer according to a DL-TFT, and encapsulates IP data into a GTP-U. For the downlink IP service data flow received from an AS, a P-GW can fragment a packet, compress a header of the packet, translate the packet into a non-IP packet that can be identified by the UE, encapsulate the non-IP packet into a GTP-U, and send the non-IP packet to the UE by using the S1-lite bearer and an RB. A downlink IP service data flow transmission process is also similar to uplink non-IP data transmission described above.

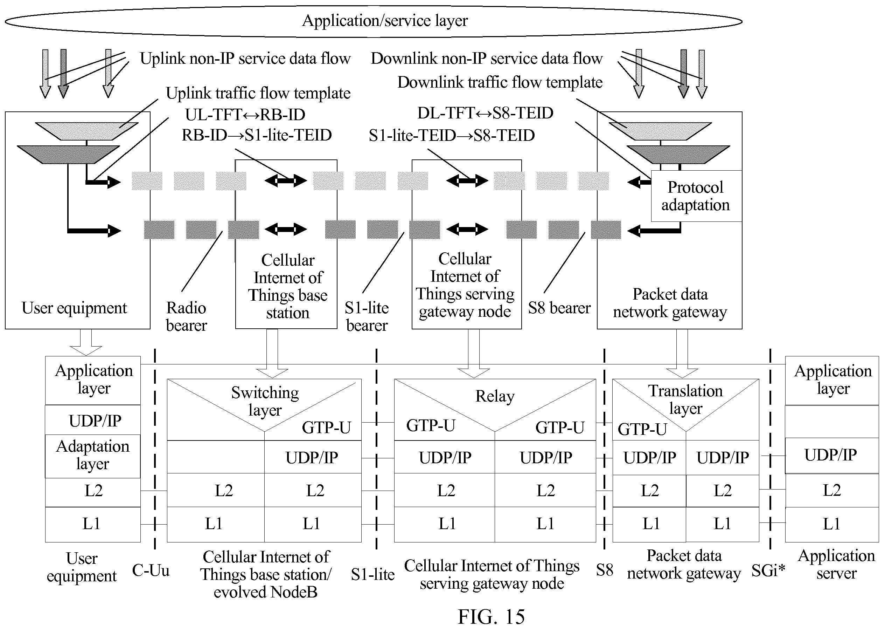

However, when a non-IP service data flow is transmitted in a roaming scenario in the CIoT system, a P-GW needs to participate in, to implement bearer association and mapping in the CIoT system. Referring to FIG. 15, FIG. 15 is a schematic diagram of a non-IP service data flow transmission process in a roaming scenario in a CloT system according to an embodiment of the present invention.

The roaming scenario is similar to the foregoing non-roaming scenario in the CIoT system. A difference is as follows: Association and mapping between a downlink non-IP service data flow and a bearer in the CIoT system, and protocol adaptation are all performed by the P-GW.

If UE does not support bearer association and mapping, a base station completes association and mapping between an uplink non-IP data flow and a bearer. The base station maps, to a corresponding S1-lite bearer according to a UL-TFT, a non-IP service data flow received from the UE, encapsulates a non-IP packet into a GTP-U, and sends the data to a C-SGN by using the S1-lite bearer.

If the UE has only one bearer used for non-IP data transmission, in the non-roaming scenario, the UE and the C-SGN may not perform packet filtering by using a TFT, but associate all received non-IP data with and map all the received non-IP data to the unique non-IP data bearer; or in the roaming scenario, the UE and the P-GW may not perform packet filtering by using a TFT, but associate all received non-IP data with and map all the received non-IP data to the unique non-IP data bearer.

Further, in this embodiment of the present invention, a solution that supports protocol adaptation to non-IP data transmission is established, and includes protocol adaptation functions such as packet fragmentation and reassembly, and packet header compression and decompression. According to this solution, transmission overheads can be reduced, and effective packet translation can be performed in different protocols. Therefore, feasibility of the solution is improved, and flexibility of the solution is enhanced.

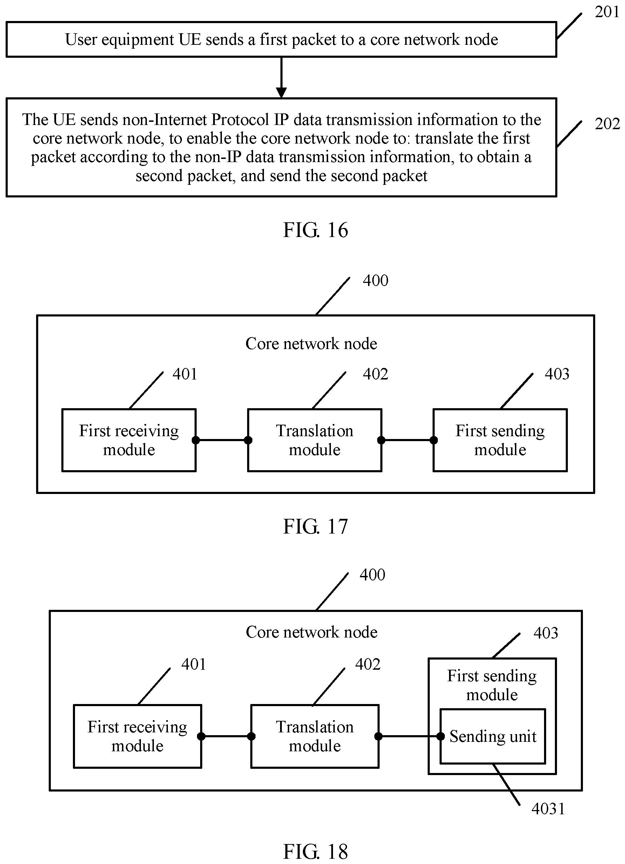

The foregoing describes the data transmission method in the embodiments of the present invention from a perspective of a core network node. The following describes the data transmission method in the embodiments of the present invention from a perspective of UE. Referring to FIG. 16, another embodiment of a data transmission method in an embodiment of the present invention includes the following steps:
201. User equipment UE sends a first packet to a core network node.

In this embodiment, the UE sends the first packet to the core network node. The first packet is a packet that is not translated.

202. The UE sends non-Internet Protocol IP data transmission information to the core network node, to enable the core network node to: translate the first packet according to the non-IP data transmission information, to obtain a second packet, and send the second packet.

In this embodiment, the UE sends an attach request to the core network node, and may add the non-IP data transmission information to the attach request. The core network node translates the received first packet according to the non-IP data transmission information, to obtain the second packet obtained after translation is performed. If the core network node receives the first packet sent by the UE, the core network node sends, to an AS by using a data transmission channel, the second packet obtained after translation is performed.

Establishing the data transmission channel may be establishing a data transmission bearer. Alternatively, data transmission may be implemented by means of signaling exchange.

In this embodiment of the present invention, a method for translating a packet by using non-IP data transmission information is provided. The UE sends the first packet and the non-Internet Protocol IP data transmission information to the core network node, to enable the core network node to: translate the first packet according to the non-IP data transmission information, to obtain the second packet, and send the second packet. So far, a non-IP data transmission process is completed. Packet translation is performed to support effective non-IP data transmission, so that complexity and costs of the UE are significantly reduced. In addition, a size of data transmitted on a network side is reduced, so that network resources are saved.

Optionally, based on the embodiment corresponding to FIG. 16, in a first optional embodiment of the data transmission method provided in this embodiment of the present invention, the non-IP data transmission information specifically includes a packet data network PDN type, a service data parameter, and an IP support capability; or
the non-IP data transmission information specifically includes the PDN type and the service data parameter.

In this embodiment, IP data transmission information may include a PDN type, a service data parameter, and an IP support capability, or may include a PDN type and a service data parameter.

The PDN type is used to indicate a specific network to which the UE needs to be connected, and whether the AS on the network side supports an IP address may be determined according to the network indicated by the PDN type.

The service data parameter is used to distinguish between different services at a data transmit end and a data receive end, and includes parameters such as a source IP address, a source port, a destination IP address, a destination port, and a transmission protocol. In addition, the service data parameter may further include another parameter related to data transmission, for example, a service level and a protocol version number.

The IP support capability indicates whether the UE supports an IP address. The IP support capability of the UE may be notified to the network side by using the attach request sent by the UE, so that the network side may perform data transmission according to whether the UE supports an IP address.

In addition, in this embodiment of the present invention, the non-IP data transmission information is specifically described. Packet translation is performed according to the PDN type, the service data parameter, and the IP support capability in the non-IP data transmission information, so that the solution has higher feasibility in actual application, and flexibility of the solution is enhanced. Because different non-IP data transmission information may bring different translation manners, in this solution of the present invention, the non-IP data transmission information is further limited.

Optionally, based on FIG. 16 or the first embodiment corresponding to FIG. 16, in a second optional embodiment of the data transmission method provided in this embodiment of the present invention, after the UE sends the non-Internet Protocol IP data transmission information to the core network node, the method may further include the following step:
The UE receives non-IP data bearer information sent by the core network node, where the non-IP data bearer information is used by the UE to determine that a data transmission bearer is successfully established.

In this embodiment, after the UE sends the non-IP data transmission information to the core network node, the core network node may establish the data transmission bearer according to the information. After successfully establishing the data bearer, the core network node sends the non-IP data bearer information to the UE. The UE receives the non-IP data bearer information, and determines that the data transmission bearer is successfully established.

The data transmission bearer may also be understood as a non-IP data bearer.

A data transmission bearer establishment process is specifically as follows: The UE provides non-IP data transmission information to a network by using an attach request message. The non-IP data transmission information includes a PDN type, a service data parameter, an IP support capability, and the like. The network side performs authentication on the UE according to a requirement. The authentication is used to verify whether a user has permission to access a system. In conventional authentication, verification is performed by using a password. A prerequisite of this manner is that each user obtaining the password has been authorized. At present, there is a more reliable authentication manner, and a current mainstream authentication manner is to verify whether a digital signature is correct by means of authentication and authorization.

An MME on the network side selects, according to the non-IP data transmission information provided by the UE, a P-GW that supports non-IP data transmission. The MME determines the corresponding P-GW according to the PDN type in the non-IP data transmission information, and initiates a create session request. The P-GW determines, according to the non-IP data transmission information provided by the UE, whether to assign an IP address to the UE.

If neither the UE nor the AS supports an IP, the P-GW may not assign an IP address to the UE, or assign an internal IP address that is only used for bearer association and mapping. If the UE does not support an IP, but the AS supports the IP, the P-GW may negotiate with the AS about IP address assignment for the UE, and an assigned IP address is used by the AS to address the UE, and is used for bearer association and mapping. If the UE and the AS support an IP, but do not transmit conventional IP data, the P-GW also needs to assign an IP address to the UE. If the UE supports an IP, but the AS does not support the IP, the P-GW assigns an IP address to the UE.

After the P-GW negotiates with the AS about IP address assignment for the UE, the P-GW establishes a bearer for non-IP data transmission of the UE according to a PCC rule from a PCRF, and feeds back bearer information, that is, non-IP data bearer information, by using a create session response message.

The non-IP data bearer information may include information such as an EPS bearer identity, a P-GW address, and a TEID. The MME sends an attach accept message to the UE. The attach accept message includes the non-IP data bearer information.

The foregoing process is implemented in an EPS network. For a CIoT system, in a non-roaming scenario, a C-SGN completes functions of the MME, an S-GW, and the P-GW in the non-IP data bearer establishment process; or in a roaming scenario, a C-SGN completes functions of the MME and an S-GW in the non-IP data bearer establishment process, and IP address assignment is still completed by the P-GW.

Further, in this embodiment of the present invention, the following is implemented: The UE provides the non-IP data transmission information to the core network, and the core network node determines IP address assignment for the UE and performs bearer establishment, according to the non-IP data transmission information provided by the UE. Non-IP data can be transmitted between the UE and the AS based on the non-IP data bearer that is established by means of negotiation. Compared with the prior art, in this solution of the present invention, the non-IP data bearer can be established between the UE and the core network node by means of negotiation, so that feasibility of the solution is improved, flexibility of the solution is enhanced, and an achievable range of the solution is wider.

Optionally, based on the second embodiment corresponding to FIG. 16, in a third optional embodiment of the data transmission method provided in this embodiment of the present invention, after the UE sends the non-Internet Protocol IP data transmission information to the core network node, the method may further include the following step:
If the core network node determines, according to the non-IP data transmission information, to assign the IP address to the UE, the UE receives the IP address sent by the core network node.

In this embodiment, the UE sends the non-IP data transmission information to the core network node, and the core network node receives the non-IP data transmission information sent by the UE. Specifically, the core network node may determine, according to the IP support capability in the non-IP data transmission information, whether to assign an IP address to the UE. If the UE has the IP support capability, the core network node negotiates with the AS for assigning an IP address to the UE, and sends the IP address to the UE, so that the UE receives the IP address sent by the core network node.

Further, in this embodiment of the present invention, the core network node determines, according to the non-IP data transmission information, whether to assign an IP address to the UE. Even if the UE does not need an IP service, the core network node may consider assigning an IP address to the UE instead of totally not assigning an IP address. The IP address is used by the AS to address the UE based on the IP address. An external device addresses the UE by using the IP address, so that accuracy and efficiency of addressing can be improved, a transmission delay can be reduced, and transmission reliability can be enhanced.

Optionally, based on the embodiment corresponding to FIG. 16, in a fourth optional embodiment of the data transmission method provided in this embodiment of the present invention, the first packet is an IP packet, and the second packet is a non-IP packet; or
the first packet is the non-IP packet, and the second packet is the IP packet.

In this embodiment, when receiving an IP packet sent by the UE or the AS, the core network node may translate the IP packet into a non-IP packet. When receiving a non-IP packet sent by the UE or the AS, the core network node may translate the non-IP packet into an IP packet.

The translation process may be implemented based on the non-IP data transmission information, and a corresponding translation manner is determined according to specific non-IP data transmission information.

In addition, in this embodiment of the present invention, the core network node may perform bidirectional translation on a packet sent by the UE or the AS, that is, may translate an IP packet into a non-IP packet, and also translate a non-IP packet into an IP packet. In actual application, translation applicability is improved, so that IP packet translation and non-IP packet translation are more convenient.

Optionally, based on FIG. 16 and the first to the fourth optional embodiments corresponding to FIG. 16, in a fifth optional embodiment of the data transmission method provided in this embodiment of the present invention, that user equipment UE sends a first packet to a core network node may include the following step:
The UE sends the non-IP packet to the core network node, where the non-IP packet carries an identifier that is used to indicate a sending party and a receiving party.

The enabling the core network node to translate the first packet according to the non-IP data transmission information, to obtain a second packet may include:
enabling the core network node to translate the identifier in the non-IP packet into IP addresses in the IP packet.

In this embodiment, if the UE sends the non-IP packet to the core network node, and the non-IP packet carries the identifiers of the sending party and the receiving party, the sending party is the UE, and the receiving party is the AS. The core network node translates a UE identifier in the non-IP packet into a UE IP address in the IP packet, and translates an AS identifier into an AS IP address, to complete non-IP packet translation. Then, the core network node may send the IP packet to the AS.

Optionally, based on FIG. 16 and the first to the fourth optional embodiments corresponding to FIG. 16, in a sixth optional embodiment of the data transmission method provided in this embodiment of the present invention, that user equipment UE sends a first packet to a core network node may include the following step:
The UE sends the IP packet to the core network node, where the IP packet carries an IP address of a sending party and an IP address of a receiving party.

The enabling the core network node to translate the first packet according to the non-IP data transmission information, to obtain a second packet may include:
enabling the core network node to translate the IP addresses in the IP packet into an identifier in the non-IP packet, where the identifier is used to indicate the sending party and the receiving party of the non-IP packet.

In this embodiment, if the UE sends the IP packet to the core network node, and the IP packet carries the IP address of the sending party and the IP address of the receiving party, the sending party is the UE, and the receiving party is the AS. The core network node translates a UE IP address in the IP packet into a UE identifier in the non-IP packet, and translates an AS IP address into an AS identifier, to complete IP packet translation. The AS identifier is used to indicate that the receiving party is the AS, and the UE identifier is used to indicate that the sending party is the UE. After obtaining the non-IP packet, the core network node sends the non-IP packet to the AS by using the data transmission channel.

Further, in this embodiment of the present invention, association and mapping between a non-IP service data flow and a bearer, and IP packet translation and non-IP packet translation are performed between the UE and the core network node, to support effective transmission of a non-IP packet. When a bearer corresponding to a non-IP service data flow is established, considering QoS of non-IP data transmission may provide better QoS guarantee for non-IP data transmission. In addition, supporting IP packet translation and non-IP packet translation also reflects feasibility of the solution in actual application.

Optionally, based on FIG. 16 and the first to the fourth optional embodiments corresponding to FIG. 16, in a seventh optional embodiment of the data transmission method provided in this embodiment of the present invention, that user equipment UE sends a first packet to a core network node may include the following step:
The UE sends non-IP sub-packets to the core network node, to enable the core network node to decompress, according to the non-IP data transmission information, compressed header information carried in the non-IP sub-packets, to obtain IP header information.

The enabling the core network node to translate the first packet according to the non-IP data transmission information, to obtain a second packet may include:
enabling the core network node to reassemble the multiple received non-IP sub-packets into one IP packet according to the non-IP data transmission information, where the IP packet carries the IP header information obtained by means of decompression.

In this embodiment, for uplink data, the UE performs header compression and fragmentation on an IP packet to be sent to an upper layer, to obtain multiple non-IP sub-packets. For downlink data, the UE receives multiple non-IP packets obtained after the core network node performs header compression and fragmentation, and performs decompression and reassembly on the multiple non-IP packets, to obtain a complete IP packet.

Specifically, the UE sends the non-IP sub-packets to the core network node, and the core network node receives the non-IP sub-packets sent by the UE and the non-IP data transmission information sent by the UE, and determines, according to the service data parameter in the information, a protocol type used in data transmission. The core network node reassembles the multiple non-IP sub-packets into one non-IP packet according to a specific protocol type. Each non-IP sub-packet may carry a fragment number. The non-IP sub-packets are reassembled according to the fragment number. A non-IP packet obtained by means of reassembly does not carry compressed header information. Then, the core network node decompresses header information for the non-IP packet, to obtain an IP packet, and sends the IP packet to the AS by using the data transmission channel.

Further, in this embodiment of the present invention, a solution that supports protocol adaptation to non-IP data transmission is established, and includes protocol adaptation functions such as packet fragmentation and reassembly, and packet header compression and decompression. According to this solution, transmission overheads can be reduced, and effective packet translation can be performed in different protocols. Therefore, feasibility of the solution is improved, and flexibility of the solution is enhanced.

Optionally, based on FIG. 16 and the first to the fourth optional embodiments corresponding to FIG. 16, in an eighth optional embodiment of the data transmission method provided in this embodiment of the present invention, after the user equipment UE sends the first packet to the core network node, the method may further include the following step:
The UE receives the non-IP packet sent by the core network node, and translates the non-IP packet to obtain an IP packet.

In this embodiment, the UE receives the non-IP packet sent by the core network node, and translates the non-IP packet to obtain an IP packet. The UE adds IP header information to the non-IP packet by means of non-IP transmission information, to obtain an IP packet.

Furthermore, in this embodiment of the present invention, the UE may translate a non-IP packet to obtain an IP packet, so as to improve feasibility of the solution.

To better implement the data transmission method provided in the embodiments of the present invention, the embodiments of the present invention further provide an apparatus based on the foregoing data transmission method. Meanings of nouns are the same as those in the foregoing data transmission method. For specific implementation details, refer to description in the method embodiments.

The foregoing describes the data transmission method in the embodiments of the present invention. The following describes a core network node in data transmission in the embodiments of the present invention. Referring to FIG. 17, an embodiment of a core network node in a data transmission method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet; and
a first sending module 403, configured to send, by using a data transmission channel, the second packet obtained after the translation module 402 performs translation.

In this embodiment, the first receiving module 401 receives the first packet from the user equipment UE or the application server AS. The translation module 402 translates, according to the non-Internet Protocol IP data transmission information, the first packet received by the first receiving module 401, to obtain the second packet. The first sending module 403 sends, by using the data transmission channel, the second packet obtained after the translation module 402 performs translation.

In this embodiment of the present invention, a method for translating a packet by using non-IP data transmission information is provided. The core network node translates the first packet, and sends, to a target device, the second packet obtained after translation is performed. So far, a non-IP data transmission process is completed. Packet translation is performed to support effective non-IP data transmission, so that complexity and costs of the UE are significantly reduced. In addition, a size of data transmitted on a network side is reduced, so that network resources are saved.

Optionally, based on the embodiment corresponding to FIG. 17, in a first optional embodiment of the core network node in the data processing method provided in this embodiment of the present invention, the non-IP data transmission information specifically includes a packet data network PDN type, a service data parameter, and an IP support capability; or
the non-IP data transmission information specifically includes the PDN type and the service data parameter.

In addition, in this embodiment of the present invention, the non-IP data transmission information is specifically described. Packet translation is performed according to the PDN type, the service data parameter, and the IP support capability in the non-IP data transmission information, so that the solution has higher feasibility in actual application, and flexibility of the solution is enhanced. Because different non-IP data transmission information may bring different translation manners, in this solution of the present invention, the non-IP data transmission information is further limited.

Referring to FIG. 18, another embodiment of a core network node in a data processing method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet; and
a first sending module 403, configured to send, by using a data transmission channel, the second packet obtained after the translation module 402 performs translation.

The first sending module 403 includes:
a sending unit 4031, configured to send the second packet by using a data transmission bearer.

Further, in this embodiment of the present invention, after performing packet translation, the core network node may send, by using the established data transmission bearer, a packet obtained after translation is performed. Receiving and sending a packet by using the data transmission bearer may improve data transmission efficiency and network quality of service, so as to enhance user experience.

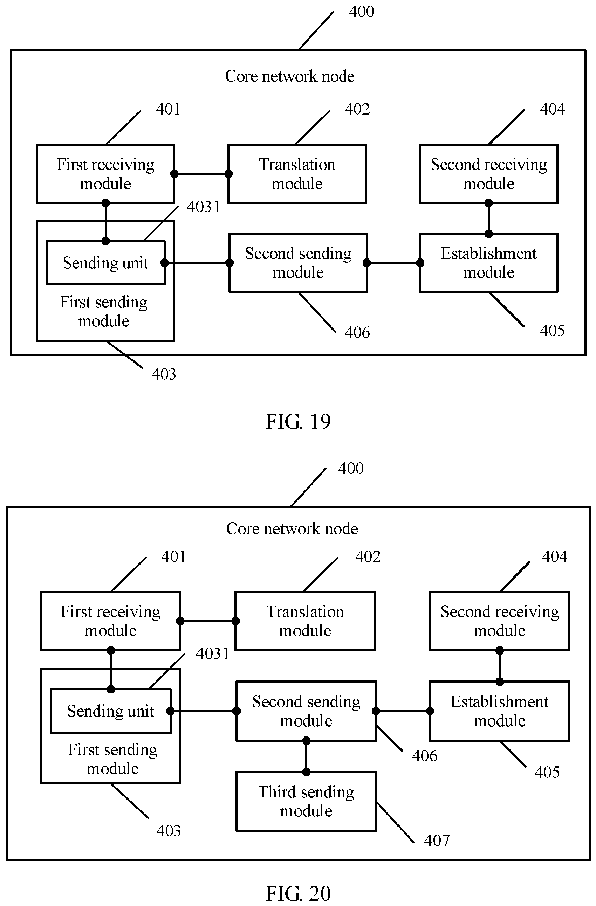

Referring to FIG. 19, another embodiment of a core network node in a data processing method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet;
a second receiving module 404, configured to: before a first sending module 403 sends a second packet by using a data transmission bearer, receive the non-IP data transmission information sent by the UE;
an establishment module 405, configured to establish the data transmission bearer according to the non-IP data transmission information received by the second receiving module 404;
a second sending module 406, configured to send non-IP data bearer information to the UE, where the non-IP data bearer information is used to notify the UE that the data transmission bearer is successfully established; and
the first sending module 403, configured to send, by using a data transmission channel, the second packet obtained after the translation module 402 performs translation.

The first sending module 403 includes:
a sending unit 4031, configured to send the second packet by using the data transmission bearer.

Further, in this embodiment of the present invention, the following is implemented: The UE provides the non-IP data transmission information to the core network, and the core network node determines IP address assignment for the UE and performs bearer establishment, according to the non-IP data transmission information provided by the UE. Non-IP data can be transmitted between the UE and the AS based on the non-IP data bearer that is established by means of negotiation. Compared with the prior art, in this solution of the present invention, the non-IP data bearer can be established between the UE and the core network node by means of negotiation, so that feasibility of the solution is improved, flexibility of the solution is enhanced, and an achievable range of the solution is wider.

Referring to FIG. 20, another embodiment of a core network node in a data processing method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet;
a second receiving module 404, configured to: before a first sending module 403 sends the second packet by using a data transmission bearer, receive the non-IP data transmission information sent by the UE;
an establishment module 405, configured to establish the data transmission bearer according to the non-IP data transmission information received by the second receiving module 404;
a second sending module 406, configured to send non-IP data bearer information to the UE, where the non-IP data bearer information is used to notify the UE that the data transmission bearer is successfully established;
a third sending module 407, configured to: after the second receiving module 406 receives the non-IP data transmission information sent by the UE, if the core network node determines, according to the non-IP data transmission information, to assign the IP address to the UE, send, by the core network node, the IP address to the UE; and
the first sending module 403, configured to send, by using a data transmission channel, the second packet obtained after the translation module 402 performs translation.

The first sending module 403 includes:
a sending unit 4031, configured to send the second packet by using the data transmission bearer.

Furthermore, in this embodiment of the present invention, the core network node determines, according to the non-IP data transmission information, whether to assign an IP address to the UE. Even if the UE does not need an IP service, the core network node may consider assigning an IP address to the UE instead of totally not assigning an IP address. The IP address is used by the AS to address the UE based on the IP address. An external device addresses the UE by using the IP address, so that accuracy and efficiency of addressing can be improved, a transmission delay can be reduced, and transmission reliability can be enhanced.

Optionally, based on the embodiment corresponding to FIG. 17, in a second optional embodiment of the core network node in the data processing method provided in this embodiment of the present invention,
the first packet is an IP packet, and the second packet is a non-IP packet; or
the first packet is the non-IP packet, and the second packet is the IP packet.

In addition, in this embodiment of the present invention, the core network node may perform bidirectional packet translation, that is, may translate an IP packet into a non-IP packet, and also translate a non-IP packet into an IP packet. In actual application, translation applicability is improved, so that IP packet translation and non-IP packet translation are more convenient.

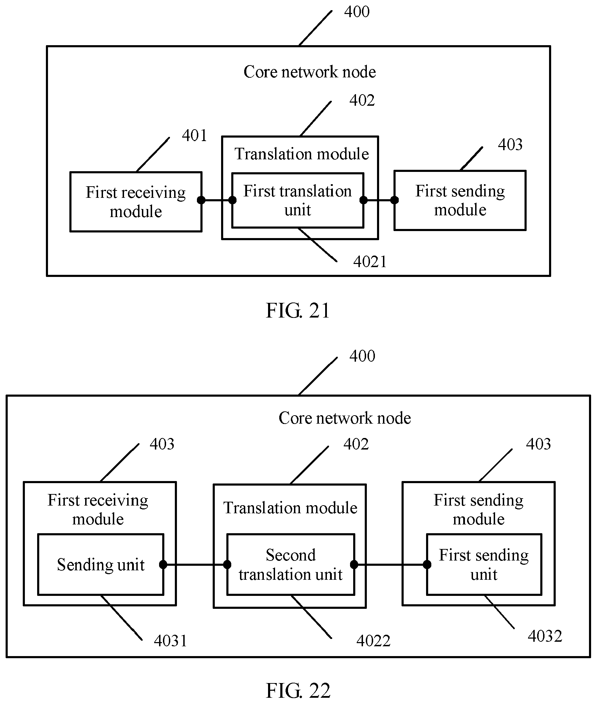

Referring to FIG. 21, another embodiment of a core network node in a data processing method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet; and
a first sending module 403, configured to send, by using a data transmission channel, the second packet obtained after the translation module 402 performs translation.

The translation module 402 includes:
a first translation unit 4021, configured to: translate the IP packet into a non-IP packet according to the non-IP data transmission information; or
translate the non-IP packet into an IP packet according to the non-IP data transmission information.

Further, in this embodiment of the present invention, the core network node performs IP packet translation or non-IP packet translation according to the non-IP data transmission information, so that translation can be implemented by using specific non-IP data transmission information, and translation efficiency can be improved.

Referring to FIG. 22, another embodiment of a core network node in a data processing method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet; and
a first sending module 403, configured to send, by using a data transmission channel, the second packet obtained after the translation module 402 performs translation.

The first receiving module 401 includes:
a first receiving unit 4011, configured to receive the IP packet sent by the UE or the AS, where the IP packet carries an IP address of a sending party and an IP address of a receiving party.

The translation module 402 further includes:
a second translation unit 4022, configured to translate, into an identifier in the non-IP packet, the IP addresses in the IP packet received by the first receiving unit 4011, where the identifier is used to indicate the sending party and the receiving party of the non-IP packet.

The first sending module 403 includes:
a first sending unit 4032, configured to send, by using the data transmission channel, the non-IP packet obtained after the second translation unit 4022 performs translation.

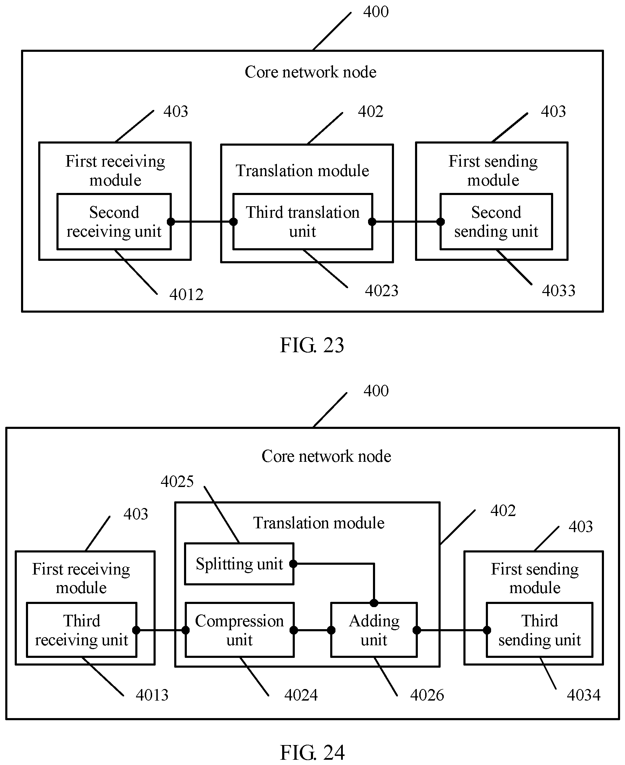

Referring to FIG. 23, another embodiment of a core network node in a data processing method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet; and
a first sending module 403, configured to send, by using a data transmission channel, the second packet obtained after the translation module 402 performs translation.

The first receiving module 401 includes:
a second receiving unit 4012, configured to receive the non-IP packet sent by the UE or the AS, where the non-IP packet carries the identifier that is used to indicate a sending party and a receiving party.

The translation module 402 includes:
a third translation unit 4023, configured to translate, into IP addresses in the IP packet, the identifier in the non-IP packet received by the second receiving unit 4012.

The first sending module 403 includes:
a second sending unit 4033, configured to send, by using the data transmission channel, the IP packet obtained after the third translation unit 4023 performs translation.

Further, in this embodiment of the present invention, association and mapping between a non-IP service data flow and a bearer, and IP packet translation and non-IP packet translation are performed between the UE and the core network node, to support effective transmission of a non-IP packet. When a bearer corresponding to a non-IP service data flow is established, considering QoS of non-IP data transmission may provide better QoS guarantee for non-IP data transmission. In addition, supporting IP packet translation and non-IP packet translation also reflects feasibility of the solution in actual application.

Referring to FIG. 24, another embodiment of a core network node in a data processing method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet; and
a first sending module 403, configured to send, by using a data transmission channel, the second packet obtained after the translation module 402 performs translation.

The first receiving module 401 includes:
a third receiving unit 4013, configured to receive the IP packet sent by the AS.

The translation module 402 includes:
a compression unit 4024, configured to compress, according to the non-IP data transmission information, a header of the IP packet received by the third receiving unit 4013, to obtain compressed header information;
a splitting unit 4025, configured to split the IP packet into multiple IP sub-packets according to the non-IP data transmission information; and
an adding unit 4026, configured to add, to each of the IP sub-packets obtained after the splitting unit 4025 performs splitting, the header information obtained after the compression unit 4024 performs compression, to obtain multiple non-IP sub-packets.

The first sending module 403 includes:
a third sending unit 4034, configured to send the non-IP packet by using the data transmission channel, where the non-IP packet includes the multiple non-IP sub-packets that are obtained after the adding unit 4026 adds the header information obtained after the compression unit 4024 performs compression.

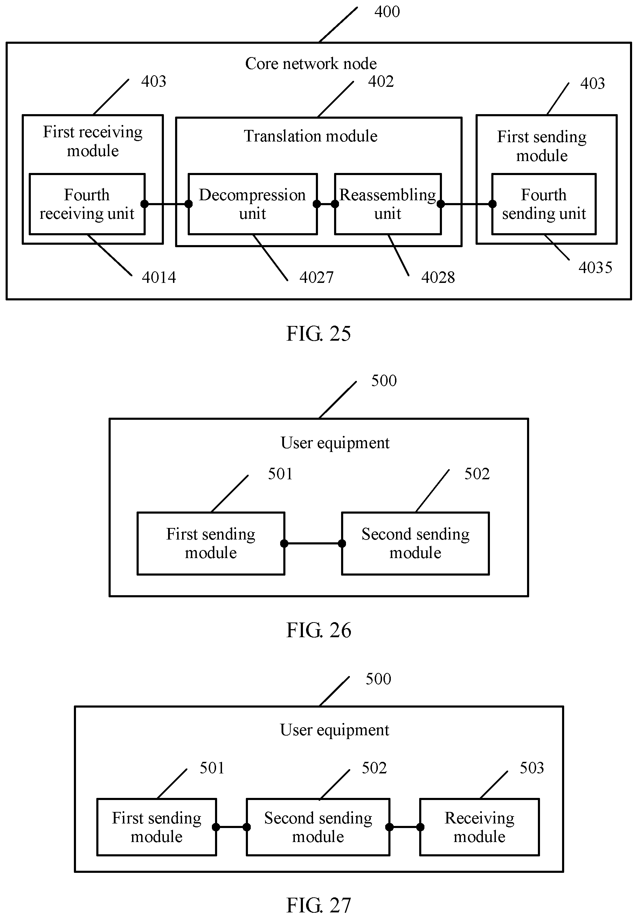

Referring to FIG. 25, another embodiment of a core network node in a data processing method in an embodiment of the present invention includes:
a first receiving module 401, configured to receive a first packet from user equipment UE or an application server AS;
a translation module 402, configured to translate, according to non-Internet Protocol IP data transmission information, the first packet received by the first receiving module 401, to obtain a second packet; and
a first sending module 403, configured to send, by using a data transmission channel, the second packet obtained after the translation module 402 performs translation.

The first receiving module 401 includes:
a fourth receiving unit 4014, configured to receive the non-IP sub-packets sent by the UE.

The translation module 402 includes:
a decompression unit 4027, configured to decompress, according to the non-IP data transmission information, compressed header information carried in the non-IP sub-packets received by the fourth receiving unit 4014, to obtain IP header information; and
a reassembling unit 4028, configured to reassemble the multiple received non-IP sub-packets into one IP packet according to the non-IP data transmission information, where the IP packet carries the IP header information obtained after the decompression unit performs decompression.

The first sending module 403 includes:
a fourth sending unit 4035, configured to send, by using the data transmission channel, the IP packet obtained after the reassembling unit 4028 performs reassembling.

Further, in this embodiment of the present invention, a solution that supports protocol adaptation to non-IP data transmission is established, and includes protocol adaptation functions such as packet fragmentation and reassembly, and packet header compression and decompression. According to this solution, transmission overheads can be reduced, and effective packet translation can be performed in different protocols. Therefore, feasibility of the solution is improved, and flexibility of the solution is enhanced.

The foregoing describes the data transmission method in the embodiments of the present invention from a perspective of a core network node. The following describes the data transmission method in the embodiments of the present invention from a perspective of UE. Referring to FIG. 26, an embodiment of UE in a data transmission method in an embodiment of the present invention includes:
a first sending module 501, configured to send, by the user equipment UE, a first packet to a core network node; and
a second sending module 502, configured to send, by the UE, non-Internet Protocol IP data transmission information to the core network node, to enable the core network node to: translate, according to the non-IP data transmission information, the first packet sent by the first sending module 501, to obtain a second packet, and send the second packet.

In this embodiment, the first sending module 501 sends the first packet to the core network node, and the second sending module 502 sends the non-Internet Protocol IP data transmission information to the core network node, to enable the core network node to: translate, according to the non-IP data transmission information, the first packet sent by the first sending module 501, to obtain the second packet, and send the second packet.

In this embodiment of the present invention, a method for translating a packet by using non-IP data transmission information is provided. The UE sends the first packet and the non-Internet Protocol IP data transmission information to the core network node, to enable the core network node to: translate the first packet according to the non-IP data transmission information, to obtain the second packet, and send the second packet. So far, a non-IP data transmission process is completed. Packet translation is performed to support effective non-IP data transmission, so that complexity and costs of the UE are significantly reduced. In addition, a size of data transmitted on a network side is reduced, so that network resources are saved.

Optionally, based on the embodiment corresponding to FIG. 26, in a first optional embodiment of the data transmission method provided in this embodiment of the present invention, the non-IP data transmission information specifically includes a packet data network PDN type, a service data parameter, and an IP support capability; or
the non-IP data transmission information specifically includes the PDN type and the service data parameter.

In addition, in this embodiment of the present invention, the non-IP data transmission information is specifically described. Packet translation is performed according to the PDN type, the service data parameter, and the IP support capability in the non-IP data transmission information, so that the solution has higher feasibility in actual application, and flexibility of the solution is enhanced. Because different non-IP data transmission information may bring different translation manners, in this solution of the present invention, the non-IP data transmission information is further limited.

Referring to FIG. 27, another embodiment of UE in a data transmission method in an embodiment of the present invention includes:
a first sending module 501, configured to send, by the user equipment UE, a first packet to a core network node;
a second sending module 502, configured to send, by the UE, non-Internet Protocol IP data transmission information to the core network node, to enable the core network node to: translate, according to the non-IP data transmission information, the first packet sent by the first sending module 501, to obtain a second packet, and send the second packet; and
a receiving module 503, configured to: after the second sending module 502 sends the non-IP data transmission information to the core network node, receive non-IP data bearer information sent by the core network node, where the non-IP data bearer information is used by the UE to determine that a data transmission bearer is successfully established.

Further, in this embodiment of the present invention, the following is implemented: The UE provides the non-IP data transmission information to the core network, and the core network node determines IP address assignment for the UE and performs bearer establishment, according to the non-IP data transmission information provided by the UE. Non-IP data can be transmitted between the UE and an AS based on the non-IP data bearer that is established by means of negotiation. Compared with the prior art, in this solution of the present invention, the non-IP data bearer can be established between the UE and the core network node by means of negotiation, so that feasibility of the solution is improved, flexibility of the solution is enhanced, and an achievable range of the solution is wider.

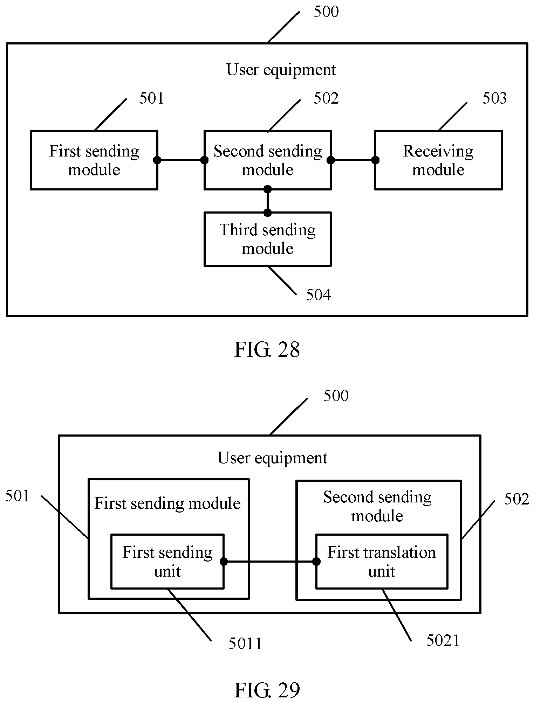

Referring to FIG. 28, another embodiment of UE in a data transmission method in an embodiment of the present invention includes:
a first sending module 501, configured to send, by the user equipment UE, a first packet to a core network node;
a second sending module 502, configured to send, by the UE, non-Internet Protocol IP data transmission information to the core network node, to enable the core network node to: translate, according to the non-IP data transmission information, the first packet sent by the first sending module 501, to obtain a second packet, and send the second packet;
a third sending module 504, configured to: after the second sending module 502 sends the non-IP data transmission information to the core network node, if the core network node determines, according to the non-IP data transmission information, to assign the IP address to the UE, receive the IP address sent by the core network node; and
a receiving module 503, configured to: after the second sending module 502 sends the non-IP data transmission information to the core network node, receive non-IP data bearer information sent by the core network node, where the non-IP data bearer information is used by the UE to determine that a data transmission bearer is successfully established.

Further, in this embodiment of the present invention, the core network node determines, according to the non-IP data transmission information, whether to assign an IP address to the UE. Even if the UE does not need an IP service, the core network node may consider assigning an IP address to the UE instead of totally not assigning an IP address. The IP address is used by an AS to address the UE based on the IP address. An external device addresses the UE by using the IP address, so that accuracy and efficiency of addressing can be improved, a transmission delay can be reduced, and transmission reliability can be enhanced.

Optionally, based on the embodiment corresponding to FIG. 26, in a second optional embodiment of the core network node in the data processing method provided in this embodiment of the present invention,
the first packet is an IP packet, and the second packet is a non-IP packet; or
the first packet is the non-IP packet, and the second packet is the IP packet.

In addition, in this embodiment of the present invention, the core network node may perform bidirectional translation on a packet sent by the UE or an AS, that is, may translate an IP packet into a non-IP packet, and also translate a non-IP packet into an IP packet. In actual application, translation applicability is improved, so that IP packet translation and non-IP packet translation are more convenient.

Referring to FIG. 29, another embodiment of UE in a data transmission method in an embodiment of the present invention includes:
a first sending module 501, configured to send, by the user equipment UE, a first packet to a core network node; and
a second sending module 502, configured to send, by the UE, non-Internet Protocol IP data transmission information to the core network node, to enable the core network node to: translate, according to the non-IP data transmission information, the first packet sent by the first sending module 501, to obtain a second packet, and send the second packet.

The first sending module 501 includes:
a first sending unit 5011, configured to send the non-IP packet to the core network node, where the non-IP packet carries an identifier that is used to indicate a sending party and a receiving party.

The second sending module 502 includes:
a first translation unit 5021, configured to enable the core network node to translate, into IP addresses in the IP packet, the identifier in the non-IP packet sent by the first sending unit 5011.

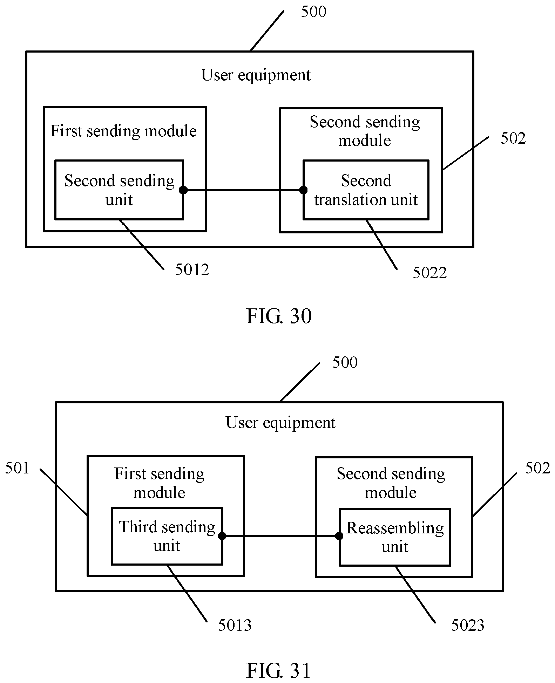

Referring to FIG. 30, another embodiment of UE in a data transmission method in an embodiment of the present invention includes:
a first sending module 501, configured to send, by the user equipment UE, a first packet to a core network node; and
a second sending module 502, configured to send, by the UE, non-Internet Protocol IP data transmission information to the core network node, to enable the core network node to: translate, according to the non-IP data transmission information, the first packet sent by the first sending module 501, to obtain a second packet, and send the second packet.

The first sending module 501 includes:
a second sending unit 5012, configured to send, by the UE, the IP packet to the core network node, where the IP packet carries an IP address of a sending party and an IP address of a receiving party.

The second sending module 502 includes:
a second translation unit 5012, configured to enable the core network node to translate, into the identifier in the non-IP packet, the IP addresses in the IP packet sent by the second sending unit 5011, where the identifier is used to indicate the sending party and the receiving party of the non-IP packet.

Further, in this embodiment of the present invention, association and mapping between a non-IP service data flow and a bearer, and IP packet translation and non-IP packet translation are performed between the UE and the core network node, to support effective transmission of a non-IP packet. When a bearer corresponding to a non-IP service data flow is established, considering QoS of non-IP data transmission may provide better QoS guarantee for non-IP data transmission. In addition, supporting IP packet translation and non-IP packet translation also reflects feasibility of the solution in actual application.

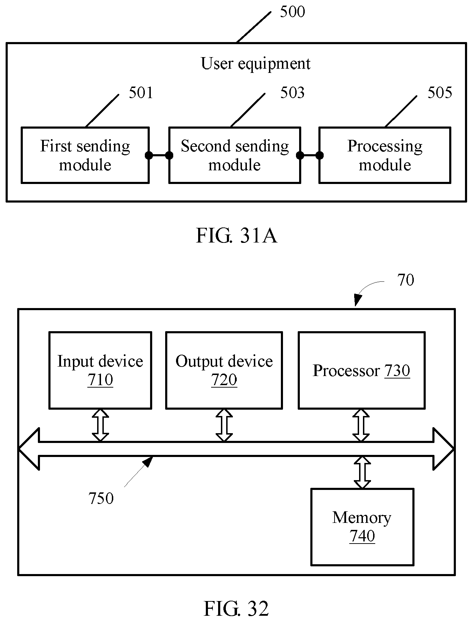

Referring to FIG. 31, another embodiment of UE in a data transmission method in an embodiment of the present invention includes:
a first sending module 501, configured to send, by the user equipment UE, a first packet to a core network node; and
a second sending module 502, configured to send, by the UE, non-Internet Protocol IP data transmission information to the core network node, to enable the core network node to: translate, according to the non-IP data transmission information, the first packet sent by the first sending module 501, to obtain a second packet, and send the second packet.

The first sending module 501 includes:
a third sending unit 5013, configured to send non-IP sub-packets to the core network node, to enable the core network node to decompress, according to the non-IP data transmission information, compressed header information carried in the non-IP sub-packets, to obtain IP header information.

The second sending module 502 includes:
a reassembling unit 5023, configured to enable the core network node to reassemble, into one IP packet according to the non-IP data transmission information, the multiple received non-IP sub-packets that are sent by the third sending unit 5013, where the IP packet carries the IP header information obtained by means of decompression.

Further, in this embodiment of the present invention, a solution that supports protocol adaptation to non-IP data transmission is established, and includes protocol adaptation functions such as packet fragmentation and reassembly, and packet header compression and decompression. According to this solution, transmission overheads can be reduced, and effective packet translation can be performed in different protocols. Therefore, feasibility of the solution is improved, and flexibility of the solution is enhanced.

Referring to FIG. 31A, another embodiment of UE in a data transmission method in an embodiment of the present invention includes:
a first sending module 501, configured to send, by the user equipment UE, a first packet to a core network node;
a second sending module 502, configured to send, by the UE, non-Internet Protocol IP data transmission information to the core network node, to enable the core network node to: translate, according to the non-IP data transmission information, the first packet sent by the first sending module 501, to obtain a second packet, and send the second packet; and
a processing module 505, configured to: receive the non-IP packet sent by the core network node, and translate the non-IP packet to obtain an IP packet.

Furthermore, in this embodiment of the present invention, the UE may translate a non-IP packet to obtain an IP packet, so as to improve feasibility of the solution.

FIG. 32 is a schematic structural diagram of a core network node 70 according to an embodiment of the present invention. The core network node 70 may include an input device 710, an output device 720, a processor 730, and a memory 740. The output device in this embodiment of the present invention may be a display device.

The memory 740 may include a read-only memory and a random access memory, and provide an instruction and data for the processor 730. A part of the memory 740 may further include a nonvolatile random access memory (NVRAM).

The memory 740 stores the following elements: an executable module or a data structure, a subset thereof, or an extended set thereof:
an operation instruction, including various operation instructions and used for implementing various operations; and
an operating system, including various system programs and used for implementing various basic services and processing a hardware-based task.

In this embodiment of the present invention, the processor 730 is configured to:
translate a first packet according to non-Internet Protocol IP data transmission information, to obtain a second packet.

Optionally, the processor 730 may be further configured to establish a data transmission bearer according to the non-IP data transmission information.

Optionally, the processor 730 may be further configured to: if the core network node 70 determines, according to the non-IP data transmission information, to assign the IP address to UE, send the IP address to the UE.

Optionally, the processor 730 may be further configured to: translate an IP packet into a non-IP packet according to the non-IP data transmission information; or
translate a non-IP packet into an IP packet according to the non-IP data transmission information.

Optionally, the processor 730 may be further configured to translate IP addresses in the IP packet into an identifier in the non-IP packet. The identifier is used to indicate a sending party and a receiving party of the non-IP packet.

Optionally, the processor 730 may be further configured to translate an identifier in the non-IP packet into IP addresses in the IP packet.

Optionally, the processor 730 may be further configured to: compress a header of the IP packet according to the non-IP data transmission information, to obtain compressed header information;
split the IP packet into multiple IP sub-packets according to the non-IP data transmission information; and
add the compressed header information to each of the IP sub-packets, to obtain multiple non-IP sub-packets.

Optionally, the processor 730 may be further configured to: decompress, according to the non-IP data transmission information, compressed header information carried in non-IP sub-packets, to obtain IP header information; and
reassemble the multiple received non-IP sub-packets into one IP packet according to the non-IP data transmission information, where the IP packet carries the IP header information obtained by means of decompression.

The processor 730 controls an operation of the core network node 70, and the processor 430 may also be referred to as a central processing unit (Central Processing Unit, CPU for short). The memory 740 may include a read-only memory and a random access memory, and provide an instruction and data for the processor 730. A part of the memory 740 may further include a nonvolatile random access memory (NVRAM). In specific application, all components of the core network node 70 are coupled together by using a bus system 750. The bus system 750 may further include a power bus, a control bus, a status signal bus, and the like in addition to a data bus. However, for clarity of description, various buses in the figure are marked as the bus system 750.

The methods disclosed in the foregoing embodiments of the present invention may be applied to the processor 730, or may be implemented by the processor 730. The processor 730 may be an integrated circuit chip and have a signal processing capability. In an implementation process, steps of the foregoing methods may be completed by using an integrated logic circuit of hardware in the processor 730 or an instruction in a form of software. The processor 730 may be a general purpose processor, a digital signal processor (digital signal processing, DSP for short), an application-specific integrated circuit (Application Specific Integrated Circuit, ASIC for short), a field-programmable gate array (Field-Programmable Gate Array, FPGA for short) or another programmable logic device, a discrete gate or a transistor logic device, or a discrete hardware assembly, and may implement or perform all the methods, steps, and logical block diagrams disclosed in the embodiments of the present invention. The general purpose processor may be a microprocessor, or the processor may be any conventional processor, or the like. The steps of the methods disclosed with reference to the embodiments of the present invention may be directly performed and completed by a hardware decoding processor, or may be performed and completed by using a combination of a hardware module and a software module in a decoding processor. The software module may be located in a mature storage medium in the art, such as a random access memory, a flash memory, a read-only memory, a programmable read-only memory, an electrically erasable programmable memory, or a register. The storage medium is located in the memory 740. The processor 730 reads information in the memory 740 and completes the steps in the foregoing methods in combination with the hardware of the processor 730.

Optionally, the input device 710 is specifically configured to:
receive a first packet from user equipment UE or an application server AS.

Optionally, the input device 710 may be further configured to receive non-IP data transmission information sent by the UE.

Optionally, the input device 710 may be further configured to receive an IP packet sent by the UE or the AS. The IP packet carries an IP address of a sending party and an IP address of a receiving party.

Optionally, the input device 710 may be further configured to receive a non-IP packet sent by the UE or the AS.

Optionally, the output device 720 is specifically configured to:
send a second packet by using a data transmission channel.

Optionally, the output device 720 may be further configured to: send the second packet by using a data transmission bearer; and
send non-IP data bearer information to the UE, where the non-IP data bearer information is used to notify the UE that the data transmission bearer is successfully established.

Optionally, the output device 720 may be further configured to send a non-IP packet by using the data transmission channel.

Optionally, the output device 720 may be further configured to send the non-IP packet by using the data transmission channel. The non-IP packet includes multiple non-IP sub-packets.

For related description of FIG. 32, refer to related description and effects of the method parts of FIG. 1 for understanding. Details are not described herein.

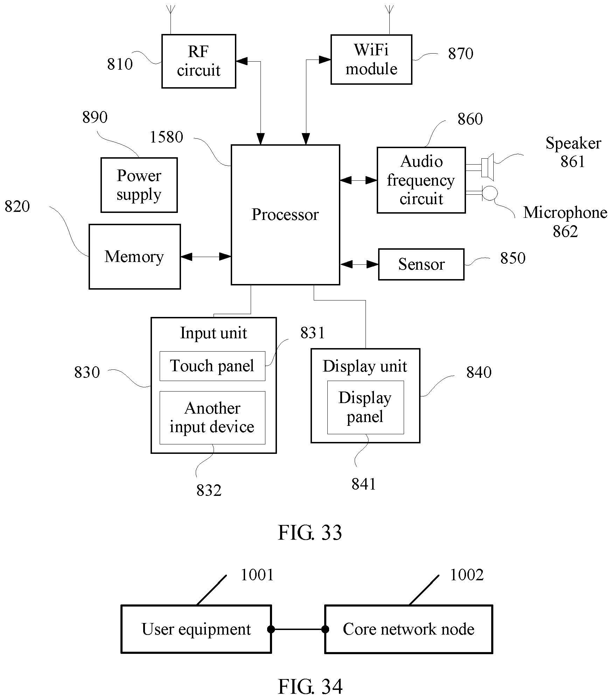

An embodiment of the present invention further provides another user equipment, as shown in FIG. 33. For ease of description, only a part related to this embodiment of the present invention is shown. For specific technical details that are not disclosed, refer to a method part in the embodiments of the present invention. The terminal may be any terminal device, including a mobile phone, a tablet computer, a personal digital assistant (Personal Digital Assistant, PDA for short), a point of sale (Point of Sales, POS for short), an in-vehicle computer, or the like. For example, the terminal is a mobile phone.

FIG. 33 shows a block diagram of a partial structure of a mobile phone related to the terminal provided in this embodiment of the present invention. Referring to FIG. 33, the mobile phone includes components such as a radio frequency (Radio Frequency, RF for short) circuit 810, a memory 820, an input unit 830, a display unit 840, a sensor 850, an audio frequency circuit 860, a Wireless Fidelity (wireless fidelity, WiFi for short) module 870, a processor 880, and a power supply 890. Persons skilled in the art may understand that, the structure of the mobile phone shown in FIG. 33 does not constitute a limitation on the mobile phone, and the mobile phone may include more or fewer components than those shown in the figure, or reassemble some components, or have different component configurations.

In the following, all components of the mobile phone are described in detail with reference to FIG. 33.

The RF circuit 810 may be configured to: receive and send information, or receive and send a signal in a call process. Particularly, after receiving downlink information from a base station, the RF circuit 810 sends the downlink information to the processor 880 for processing, and in addition, sends designed uplink data to the base station. Generally, the RF circuit 810 includes but is not limited to an antenna, at least one amplifier, a transceiver, a coupler, a low noise amplifier (Low Noise Amplifier, LNA for short), a duplexer, and the like. In addition, the RF circuit 810 may further communicate with a network or another device by means of wireless communication. Any communications standard or protocol may be used for the wireless communication, including but not limited to a Global System for Mobile Communications (Global System of Mobile communication, GSM for short), a general packet radio service (General Packet Radio Service, GPRS for short), Code Division Multiple Access (Code Division Multiple Access, CDMA), Wideband Code Division Multiple Access (Wideband Code Division Multiple Access, WCDMA for short), Long Term Evolution (Long Term Evolution, LTE for short), email, a short message service (Short Messaging Service, SMS for short), and the like.

The memory 820 may be configured to store a software program and a module. By running the software program and the module that are stored in the memory 820, the processor 880 performs various function applications of the mobile phone and data processing. The memory 820 may mainly include a program storage area and a data storage area. The program storage area may store an operating system, an application program required by at least one function (such as a sound playing function and an image playing function), and the like. The data storage area may store data (such as audio data or a phone book) created according to use of the mobile phone, and the like. In addition, the memory 820 may include a high-speed random access memory, and may further include a nonvolatile memory, such as at least one magnetic disk storage component, a flash memory component, or another volatile solid-state storage component.

The input unit 830 may be configured to receive entered digital or character information, and generate key signal input related to user setting and function control of the mobile phone. Specifically, the input unit 830 may include a touch panel 831 and another input device 832. The touch panel 831, also referred to as a touchscreen, may collect a touch operation performed by a user on or near the touch panel 831 (for example, an operation performed by the user on the touch panel 831 or near the touch panel 831 by using any suitable object or accessory such as a finger or a stylus), and drive a corresponding connection apparatus according to a preset program. Optionally, the touch panel 831 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, sends the touch point coordinates to the processor 880, and can receive and execute a command sent by the processor 880. In addition, the touch panel 831 may be implemented by using multiple types, such as a resistive type, a capacitive type, an infrared ray, and a surface acoustic wave. In addition to the touch panel 831, the input unit 830 may include another input device 832. Specifically, the another input device 832 may include but is not limited to one or more of a physical keyboard, a function button (such as a volume control button or an on/off button), a trackball, a mouse, a joystick, or the like.

The display unit 840 may be configured to display information entered by the user or information provided for the user, and various menus of the mobile phone. The display screen 840 may include a display panel 841. Optionally, the display panel 841 may be configured in a form such as a liquid crystal display (Liquid Crystal Display, LCD for short) or an organic light-emitting diode (Organic Light-Emitting Diode, OLED for short). Further, the touch panel 831 may cover the display panel 841. After detecting a touch operation on or near the touch panel 831, the touch panel 831 transfers the touch operation to the processor 880 to determine a type of a touch event, and then the processor 880 provides corresponding visual output on the display panel 841 according to the type of the touch event. In FIG. 33, although the touch panel 831 and the display panel 841 are used as two independent components to implement input and input functions of the mobile phone, in some embodiments, the touch panel 831 and the display panel 841 may be integrated to implement the input and output functions of the mobile phone.

The mobile phone may further include at least one sensor 850, such as a light sensor, a motion sensor, or another sensor. Specifically, the light sensor may include an ambient light sensor and a proximity sensor. The ambient light sensor may adjust luminance of the display panel 841 according to brightness of ambient light. The proximity sensor may turn off the display panel 841 and/or backlight when the mobile phone moves to an ear of the user. As a type of the motion sensor, an acceleration sensor may detect a value of an acceleration in each direction (generally, three axes), may detect a value and a direction of gravity in a static mode, and may be used in an application for identifying a mobile phone posture (such as screen switching between landscape and portrait modes, a related game, or magnetometer posture calibration), a function related to vibration identification (such as a pedometer or a knock), and the like. For another sensor such as a gyroscope, a barometer, a hygrometer, a thermometer, or an infrared sensor that may be further disposed on the mobile phone, details are not described herein.

The audio frequency circuit 860, a speaker 861, and a microphone 862 may provide an audio interface between the user and the mobile phone. The audio frequency circuit 860 may convert received audio data into an electrical signal, and transmits the electrical signal to the speaker 861, and the speaker 861 converts the electrical signal into a sound signal for output. In addition, the microphone 862 converts a collected sound signal into an electrical signal. The audio frequency circuit 860 receives the electrical signal, converts the electrical signal into audio data, and outputs the audio data to the processor 880 for processing, so as to send the audio data to, for example, another mobile phone, by using the RF circuit 810, or output the audio data to the memory 820 for further processing.

WiFi belongs to a short-range wireless transmission technology. The mobile phone may help, by using the WiFi module 870, the user receive and send an email, browse a web page, access streaming media, and the like. The WiFi module 870 provides wireless broadband Internet access for the user. Although the WiFi module 870 is shown in FIG. 33, it may be understood that the WiFi module 870 is not a mandatory component of the mobile phone, and may be totally omitted as required without changing the essence of the present invention.

The processor 880 is a control center of the mobile phone, and uses various interfaces and lines to connect all parts of the entire mobile phone, and performs various functions of the mobile phone and data processing by running or executing the software program and/or the module that are/is stored in the memory 820 and invoking data stored in the memory 820, so as to perform overall monitoring on the mobile phone. Optionally, the processor 1180 may include one or more processing units. Preferably, the processor 880 may integrate an application processor and a modem processor. The application processor mainly processes an operating system, a user interface, an application program, and the like. The modem processor mainly processes wireless communication. It may be understood that the foregoing modem processor may not be integrated into the processor 880.

The mobile phone further includes the power supply 890 (such as a battery) that supplies power to each component. Preferably, the power supply may be logically connected to the processor 880 by using a power supply management system, so as to implement functions such as charging management, discharging management, and power consumption management by using the power supply management system.

Although not shown, the mobile phone may further include a camera, a Bluetooth module, and the like. Details are not described herein.

In this embodiment of the present invention, the processor 880 included in the terminal further has the following function:
enabling a core network node to translate an identifier in a non-IP packet into IP addresses in an IP packet.

Optionally, the processor 880 further includes the following function:
enabling a core network node to translate IP addresses in an IP packet into an identifier in a non-IP packet, where the identifier is used to indicate a sending party and a receiving party of the non-IP packet.

Optionally, the processor 880 further includes the following function:
enabling a core network node to reassemble multiple non-IP sub-packets into one non-IP packet according to non-IP data transmission information, and translate the non-IP packet into an IP packet.

Optionally, the processor 880 further includes the following functions:
enabling a core network node to split one IP packet into multiple IP sub-packets according to non-IP data transmission information, where the IP sub-packet carries compressed header information; and
enabling the core network node to reassemble the multiple IP sub-packets into one non-IP packet according to the compressed header information.

An output device included in the terminal further has the following functions:
sending a first packet to a core network node; and
sending non-Internet Protocol IP data transmission information to the core network node, to enable the core network node to: translate the first packet according to the non-IP data transmission information, to obtain a second packet, and send the second packet.

Optionally, the output device further includes the following function:
if the core network node determines, according to the non-IP data transmission information, to assign the IP address to the UE, receiving the IP address sent by the core network node.

Optionally, the output device further includes the following function:
sending a non-IP packet to the core network node, where the non-IP packet carries an identifier that is used to indicate a sending party and a receiving party.

Optionally, the output device further includes the following function:
sending an IP packet to the core network node, where the IP packet carries an IP address of a sending party and an IP address of a receiving party.

Optionally, the output device further includes the following function:
sending non-IP sub-packets to the core network node, to enable the core network node to decompress, according to the non-IP data transmission information, compressed header information carried in the non-IP sub-packets, to obtain IP header information.

The input unit 830 included in the terminal further has the following function:
receiving non-IP data bearer information sent by the core network node, where the non-IP data bearer information is used by the UE to determine that a data transmission bearer is successfully established.

The following describes a data transmission system in an embodiment of the present invention. Referring to FIG. 34, a data transmission system in an embodiment of the present invention includes:
user equipment 1001 and a core network node 1002.

The user equipment 1001 is configured to: send a first packet to the core network node 1002, and send non-Internet Protocol IP data transmission information to the core network node 1002, to enable the core network node 1002 to: translate the first packet according to the non-IP data transmission information, to obtain a second packet, and send the second packet.

The core network node 1002 is configured to: receive a first packet from the user equipment UE 1001 or an application server AS; translate the first packet according to non-Internet Protocol IP data transmission information, to obtain a second packet; and send the second packet by using a data transmission channel.

In this embodiment of the present invention, a method for translating a packet by using non-IP data transmission information is provided. The core network node translates the first packet, and sends, to a target device, the second packet obtained after translation is performed. So far, a non-IP data transmission process is completed. Packet translation is performed to support effective non-IP data transmission, so that complexity and costs of the UE are significantly reduced. In addition, a size of data transmitted on a network side is reduced, so that network resources are saved.

In the foregoing embodiments, the description of each embodiment has respective focuses. For a part that is not described in detail in an embodiment, refer to related description in other embodiments.

In the several embodiments provided in this application, it should be understood that the disclosed system, apparatus, and method may be implemented in other manners. For example, the described apparatus embodiment is only an example. For example, the unit division is only logical function division and may be other division in actual implementation. For example, multiple units or components may be reassembled or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The data transmission method provided in the present invention is described in detail above. The principle and implementations of the present invention are described herein by using specific examples. The description about the embodiments is only provided to help understand the method and core ideas of the present invention. In addition, persons skilled in the art can make variations and modifications to the present invention in terms of the specific implementations and application scopes according to the ideas of the embodiments of the present invention. Therefore, the content of specification shall not be construed as a limit to the present invention.

## Claims

1. A data transmission method, comprising:
receiving, by a core network node, a first packet from user equipment UE or an application server AS;
translating, by the core network node, the first packet according to non-Internet Protocol IP data transmission information, to obtain a second packet; and
sending, by the core network node, the second packet by using a data transmission channel.

2. The method according to claim 1, wherein the non-IP data transmission information specifically comprises a packet data network PDN type, a service data parameter, and an IP support capability;
the non-IP data transmission information specifically comprises the PDN type and the service data parameter; or
the non-IP data transmission information specifically comprises the PDN type and the IP support capability.

3. The method according to claim 1 or 2, wherein the sending, by the core network node, the second packet by using a data transmission channel comprises:
sending, by the core network node, the second packet by using a data transmission bearer.

4. The method according to claim 3, wherein before the sending, by the core network node, the second packet by using a data transmission bearer, the method further comprises:
receiving, by the core network node, the non-IP data transmission information sent by the UE;
establishing, by the core network node, the data transmission bearer according to the non-IP data transmission information; and
sending, by the core network node, non-IP data bearer information to the UE, wherein the non-IP data bearer information is used to notify the UE that the data transmission bearer is successfully established.

5. The method according to claim 4, wherein after the receiving, by the core network node, the non-IP data transmission information sent by the UE, the method further comprises:
if the core network node determines, according to the non-IP data transmission information, to assign an IP address to the UE, sending, by the core network node, the IP address to the UE.

6. The method according to claim 1, wherein
the first packet is an IP packet, and the second packet is a non-IP packet; or
the first packet is the non-IP packet, and the second packet is the IP packet.

7. The method according to any one of claims 1 to 6, wherein the translating, by the core network node, the first packet according to non-Internet Protocol IP data transmission information, to obtain a second packet comprises:
translating, by the core network node, the IP packet into a non-IP packet according to the non-IP data transmission information; or
translating, by the core network node, the non-IP packet into an IP packet according to the non-IP data transmission information.

8. The method according to claim 7, wherein the receiving, by a core network node, a first packet from user equipment UE or an application server AS comprises:
receiving, by the core network node, the IP packet sent by the UE or the AS, wherein the IP packet carries an IP address of a sending party and an IP address of a receiving party;
the translating, by the core network node, the IP packet into a non-IP packet according to the non-IP data transmission information comprises:
translating, by the core network node, the IP addresses in the IP packet into an identifier in the non-IP packet, wherein the identifier is used to indicate the sending party and the receiving party of the non-IP packet; and
the sending, by the core network node, the second packet by using a data transmission channel comprises:
sending, by the core network node, the non-IP packet by using the data transmission channel.

9. The method according to claim 7, wherein the receiving, by a core network node, a first packet from user equipment UE or an application server AS comprises:
receiving, by the core network node, the non-IP packet sent by the UE or the AS, wherein the non-IP packet carries an identifier that is used to indicate a sending party and a receiving party;
the translating, by the core network node, the non-IP packet into an IP packet according to the non-IP data transmission information comprises:
translating, by the core network node, the identifier in the non-IP packet into IP addresses in the IP packet; and
the sending, by the core network node, the second packet by using a data transmission channel comprises:
sending, by the core network node, the IP packet by using the data transmission channel.

10. The method according to claim 7, wherein the receiving, by a core network node, a first packet from user equipment UE or an application server AS comprises:
receiving, by the core network node, the IP packet sent by the AS;
the translating, by the core network node, the IP packet into a non-IP packet according to the non-IP data transmission information comprises:
compressing, by the core network node, a header of the IP packet according to the non-IP data transmission information, to obtain compressed header information;
splitting, by the core network node, the IP packet into multiple IP sub-packets according to the non-IP data transmission information; and
adding, by the core network node, the compressed header information to each of the IP sub-packets, to obtain multiple non-IP sub-packets; and
the sending, by the core network node, the second packet by using a data transmission channel comprises:
sending, by the core network node, the non-IP packet by using the data transmission channel, wherein the non-IP packet comprises the multiple non-IP sub-packets.

11. The method according to claim 7, wherein the receiving, by a core network node, a first packet from user equipment UE or an application server AS comprises:
receiving, by the core network node, non-IP sub-packets sent by the UE;
the translating, by the core network node, the non-IP packet into an IP packet according to the non-IP data transmission information comprises:
decompressing, by the core network node according to the non-IP data transmission information, compressed header information carried in the non-IP sub-packets, to obtain IP header information; and
reassembling, by the core network node, the received non-IP sub-packets into one IP packet according to the non-IP data transmission information, wherein the IP packet carries the IP header information obtained by means of decompression; and
the sending, by the core network node, the second packet by using a data transmission channel comprises:
sending, by the core network node, the IP packet by using the data transmission channel.

12. A data transmission method, comprising:
sending, by user equipment UE, a first packet to a core network node; and
sending, by the UE, non-Internet Protocol IP data transmission information to the core network node, to enable the core network node to: translate the first packet according to the non-IP data transmission information, to obtain a second packet, and send the second packet.

13. The method according to claim 12, wherein the non-IP data transmission information specifically comprises a packet data network PDN type, a service data parameter, and an IP support capability;
the non-IP data transmission information specifically comprises the PDN type and the service data parameter; or
the non-IP data transmission information specifically comprises the PDN type and the IP support capability.

14. The method according to claim 12 or 13, wherein after the sending, by the UE, non-Internet Protocol IP data transmission information to the core network node, the method further comprises:
receiving, by the UE, non-IP data bearer information sent by the core network node, wherein the non-IP data bearer information is used by the UE to determine that a data transmission bearer is successfully established.

15. The method according to claim 14, wherein after the sending, by the UE, non-Internet Protocol IP data transmission information to the core network node, the method further comprises:
if the core network node determines, according to the non-IP data transmission information, to assign the IP address to the UE, receiving, by the UE, the IP address sent by the core network node.

16. The method according to claim 12, wherein
the first packet is an IP packet, and the second packet is a non-IP packet; or
the first packet is the non-IP packet, and the second packet is the IP packet.

17. The method according to any one of claims 12 to 16, wherein the sending, by user equipment UE, a first packet to a core network node comprises:
sending, by the UE, the non-IP packet to the core network node, wherein the non-IP packet carries an identifier that is used to indicate a sending party and a receiving party; and
the enabling the core network node to translate the first packet according to the non-IP data transmission information, to obtain a second packet comprises:
enabling the core network node to translate the identifier in the non-IP packet into IP addresses in an IP packet.

18. The method according to any one of claims 12 to 16, wherein the sending, by user equipment UE, a first packet to a core network node comprises:
sending, by the UE, the IP packet to the core network node, wherein the IP packet carries an IP address of a sending party and an IP address of a receiving party; and
the enabling the core network node to translate the first packet according to the non-IP data transmission information, to obtain a second packet comprises:
enabling the core network node to translate the IP addresses in the IP packet into an identifier in the non-IP packet, wherein the identifier is used to indicate the sending party and the receiving party of the non-IP packet.

19. The method according to any one of claims 12 to 16, wherein the sending, by user equipment UE, a first packet to a core network node comprises:
sending, by the UE, non-IP sub-packets to the core network node, to enable the core network node to decompress, according to the non-IP data transmission information, compressed header information carried in the non-IP sub-packets, to obtain IP header information; and
the enabling the core network node to translate the first packet according to the non-IP data transmission information, to obtain a second packet comprises:
enabling the core network node to reassemble the received non-IP sub-packets into one IP packet according to the non-IP data transmission information, wherein the IP packet carries the IP header information obtained by means of decompression.

20. The method according to any one of claims 12 to 16, wherein after the sending, by user equipment UE, a first packet to a core network node, the method further comprises:
receiving, by the UE, a non-IP packet sent by the core network node, and translating the non-IP packet to obtain an IP packet.

21. A core network node, comprising:
a first receiving module, configured to receive a first packet from user equipment UE or an application server AS;
a translation module, configured to translate, according to non-Internet Protocol IP data transmission information, the first packet received by the first receiving module, to obtain a second packet; and
a first sending module, configured to send, by using a data transmission channel, the second packet obtained after the translation module performs translation.

22. The core network node according to claim 21, wherein
the non-IP data transmission information specifically comprises a packet data network PDN type, a service data parameter, and an IP support capability;
the non-IP data transmission information specifically comprises the PDN type and the service data parameter; or
the non-IP data transmission information specifically comprises the PDN type and the IP support capability.

23. The core network node according to claim 21 or 22, wherein the first sending module comprises:
a sending unit, configured to send the second packet by using a data transmission bearer.

24. The core network node according to claim 23, wherein the core network node further comprises:
a second receiving module, configured to: before the first sending module sends the second packet by using the data transmission bearer, receive the non-IP data transmission information sent by the UE;
an establishment module, configured to establish the data transmission bearer according to the non-IP data transmission information received by the second receiving module; and
a second sending module, configured to send non-IP data bearer information to the UE, wherein the non-IP data bearer information is used to notify the UE that the data transmission bearer is successfully established.

25. The core network node according to claim 24, wherein the core network node further comprises:
a third sending module, configured to: after the second receiving module receives the non-IP data transmission information sent by the UE, if the core network node determines, according to the non-IP data transmission information, to assign the IP address to the UE, send, by the core network node, the IP address to the UE.

26. The core network node according to claim 21, wherein
the first packet is an IP packet, and the second packet is a non-IP packet; or
the first packet is the non-IP packet, and the second packet is the IP packet.

27. The core network node according to any one of claims 21 to 26, wherein the translation module comprises:
a first translation unit, configured to: translate the IP packet into a non-IP packet according to the non-IP data transmission information; or
translate the non-IP packet into an IP packet according to the non-IP data transmission information.

28. The core network node according to claim 27, wherein the first receiving module comprises:
a first receiving unit, configured to receive the IP packet sent by the UE or the AS, wherein the IP packet carries an IP address of a sending party and an IP address of a receiving party;
the translation module comprises:
a second translation unit, configured to translate, into an identifier in the non-IP packet, the IP addresses in the IP packet received by the first receiving unit, wherein the identifier is used to indicate the sending party and the receiving party of the non-IP packet; and
the first sending module comprises:
a first sending unit, configured to send, by using the data transmission channel, the non-IP packet obtained after the second translation unit performs translation.

29. The core network node according to claim 27, wherein the first receiving module comprises:
a second receiving unit, configured to receive the non-IP packet sent by the UE or the AS, wherein the non-IP packet carries an identifier that is used to indicate a sending party and a receiving party;
the translation module comprises:
a third translation unit, configured to translate, into IP addresses in the IP packet, the identifier in the non-IP packet received by the second receiving unit; and
the first sending module comprises:
a second sending unit, configured to send, by using the data transmission channel, the IP packet obtained after the third translation unit performs translation.

30. The core network node according to claim 27, wherein the first receiving module comprises:
a third receiving unit, configured to receive the IP packet sent by the AS;
the translation module comprises:
a compression unit, configured to compress, according to the non-IP data transmission information, a header of the IP packet received by the third receiving unit, to obtain compressed header information;
a splitting unit, configured to split the IP packet into multiple IP sub-packets according to the non-IP data transmission information; and
an adding unit, configured to add, to each of the IP sub-packets obtained after the splitting unit performs splitting, the header information obtained after the compression unit performs compression, to obtain multiple non-IP sub-packets; and
the first sending module comprises:
a third sending unit, configured to send the non-IP packet by using the data transmission channel, wherein the non-IP packet comprises the multiple non-IP sub-packets that are obtained after the adding unit adds the header information obtained after the compression unit performs compression.

31. The core network node according to claim 27, wherein the first receiving module comprises:
a fourth receiving unit, configured to receive non-IP sub-packets sent by the UE;
the translation module comprises:
a decompression unit, configured to decompress, according to the non-IP data transmission information, compressed header information carried in the non-IP sub-packets, to obtain IP header information; and
a reassembling unit, configured to reassemble the received non-IP sub-packets into one IP packet according to the non-IP data transmission information, wherein the IP packet carries the IP header information obtained after the decompression unit performs decompression; and
the first sending module comprises:
a fourth sending unit, configured to send, by the core network node, the IP packet by using the data transmission channel.

32. User equipment, comprising:
a first sending module, configured to send a first packet to a core network node; and
a second sending module, configured to send non-Internet Protocol IP data transmission information to the core network node, to enable the core network node to: translate, according to the non-IP data transmission information, the first packet sent by the first sending module, to obtain a second packet, and send the second packet.

33. The user equipment according to claim 32, wherein
the non-IP data transmission information specifically comprises a packet data network PDN type, a service data parameter, and an IP support capability;
the non-IP data transmission information specifically comprises the PDN type and the service data parameter; or
the non-IP data transmission information specifically comprises the PDN type and the IP support capability.

34. The user equipment according to claim 32 or 33, wherein the user equipment further comprises:
a receiving module, configured to: after the second sending module sends the non-IP data transmission information to the core network node, receive non-IP data bearer information sent by the core network node, wherein the non-IP data bearer information is used by the UE to determine that a data transmission bearer is successfully established.

35. The user equipment according to claim 34, wherein the user equipment further comprises:
a third sending module, configured to: after the second sending module sends the non-IP data transmission information to the core network node, if the core network node determines, according to the non-IP data transmission information, to assign the IP address to the UE, receive the IP address sent by the core network node.

36. The user equipment according to claim 32, wherein
the first packet is an IP packet, and the second packet is a non-IP packet; or
the first packet is the non-IP packet, and the second packet is the IP packet.

37. The user equipment according to any one of claims 32 to 36, wherein the first sending module comprises:
a first sending unit, configured to send the non-IP packet to the core network node, wherein the non-IP packet carries an identifier that is used to indicate a sending party and a receiving party; and
the second sending module comprises:
a first translation unit, configured to enable the core network node to translate, into IP addresses in the IP packet, the identifier in the non-IP packet sent by the first sending unit.

38. The user equipment according to any one of claims 32 to 36, wherein the first sending module comprises:
a second sending unit, configured to send, by the UE, the IP packet to the core network node, wherein the IP packet carries an IP address of a sending party and an IP address of a receiving party; and
the second sending module comprises:
a second translation unit, configured to enable the core network node to translate, into an identifier in the non-IP packet, the IP addresses in the IP packet sent by the second sending unit, wherein the identifier is used to indicate the sending party and the receiving party of the non-IP packet.

39. The user equipment according to any one of claims 32 to 36, wherein the first sending module comprises:
a third sending unit, configured to send non-IP sub-packets to the core network node, to enable the core network node to decompress, according to the non-IP data transmission information, compressed header information carried in the non-IP sub-packets, to obtain IP header information; and
the second sending module comprises:
a reassembling unit, configured to enable the core network node to reassemble, into one IP packet according to the non-IP data transmission information, the received non-IP sub-packets that are sent by the third sending unit, wherein the IP packet carries the IP header information obtained by means of decompression.

40. The user equipment according to any one of claims 32 to 36, wherein the user equipment further comprises:
a processing module, configured to: receive a non-IP packet sent by the core network node, and translate the non-IP packet to obtain an IP packet.

41. A core network node, comprising:
an input device, an output device, a processor, and a memory, wherein
the input device executes the following procedure:
receiving a first packet from user equipment UE or an application server AS;
the processor executes the following procedure:
translating the first packet according to non-Internet Protocol IP data transmission information, to obtain a second packet; and
the output device executes the following procedure:
sending the second packet by using a data transmission channel.

42. User equipment, comprising:
an input device, an output device, a processor, and a memory, wherein
the output device executes the following procedure:
sending a first packet to a core network node; and
sending non-Internet Protocol IP data transmission information to the core network node, to enable the core network node to: translate the first packet according to the non-IP data transmission information, to obtain a second packet, and send the second packet.

43. A data transmission system, comprising: a core network node and user equipment, wherein
the core network node is configured to: receive a first packet from the user equipment UE or an application server AS; translate the first packet according to non-Internet Protocol IP data transmission information, to obtain a second packet; and send the second packet by using a data transmission channel;
the user equipment is configured to: send a first packet to the core network node, and send non-Internet Protocol IP data transmission information to the core network node, to enable the core network node to: translate the first packet according to non-IP data transmission information, to obtain a second packet, and send the second packet; and
the application server is configured to: send a first packet to the core network node, to enable the core network node to: translate the first packet according to the non-IP data transmission information, to obtain a second packet, and send the second packet; and negotiate with the core network node about IP address assignment for the UE.
